# EUROPEAN PATENT SPECIFICATION

(11) **EP 4 536 501 B1**
(45) Date of publication and mention of the grant of the patent: **25.03.2026**
(21) Application number: 23732680.6
(22) Date of filing: 30.05.2023
(51) Int. Cl.: B60L 53/14, B60L 53/10, H02J 7/02

(54) **SYSTEM FOR CHARGING ELECTRIC VEHICLES**
SYSTEM ZUM LADEN VON ELEKTROFAHRZEUGEN
SYSTÈME DE CHARGE DE VÉHICULES ÉLECTRIQUES

(30) Priority: 08.06.2022 IT 202200012179
(43) Date of publication of application: 16.04.2025
(73) Proprietor: Stellantis Europe S.p.A., 10135 Torino (TO) (IT)
(72) Inventor: RAZI KAMANAJ OLIA, Kaveh, 10135 Torino (IT)
(74) Representative: Buzzi, Notaro & Antonielli d'Oulx S.p.A.
(86) International application number: PCT/IB2023/055506
(87) International publication number: WO 2023/237963

(56) References cited:
- EP-A1- 3 942 671
- CN-A- 112 537 216

## Description

### Technical field

The description relates to systems for charging electric batteries.

One or more embodiments may be applied to electric vehicles (EVs).

### Prior art

There are currently mainly two modes of charging a battery equipped on board a battery-powered electric vehicle (BEV): one mode is commonly referred to as "AC on-board charging", and the other mode is commonly referred to as "DC fast charging". Each BEV is equipped with dedicated electronics for implementing both of the alternative charging modes. A dedicated electronic component for AC on-board charging is commonly referred to as "on-board charging module" (OBCM). Known OBCMs are configured for charging battery vehicles by converting the AC voltage into DC voltage. To do this, the OBCM keeps the AC voltage galvanically insulated from the battery. The DC fast-charging mode comprises coupling a charging station directly to the battery. The type of charging station that is commonly available (for example, in towns) to carry out DC charging is commonly referred to as "electric-vehicle supply equipment" (EVSE). These charging stations are configured for supplying a DC voltage level of approximately 400 V and are able to charge high-voltage (HV) batteries to up to 500 V. Consequently, EVSEs may not be suited to charging batteries to 800 V.

Existing solutions moreover involve an additional electrical module commonly referred to as "DC boost-charging (DCBC) module", which comprises a DC-DC boost converter configured to render the voltage of the EVSE suited for charging the batteries to 800 V, enabling charging to 800 V of BEVs starting from a 400-V DC charging station or EVSE. Known DCBC modules comprise a non-insulated DCBC boost converter for boosting the DC voltage from 400 V to 850 V.

Such an additional electronic modules increases the costs and volume of the vehicle.

Another known solution comprises a switchable battery so as to reach the level of 800 V by connecting in series two separate battery packs at the level of 400 V each. These two 400-V batteries are connected in parallel for being charged by a 400-V EVSE.

Battery packs that comprise switchable batteries are more costly, complex, and have a larger volume. The further space for the power distribution and/or a junction box may entail an economic burden for development of a new battery pack. Power relays present the additional impact of possibly affecting the reliability of the battery pack.

Another solution for dealing with this problem adopts a power-inverter module (PIM) and inductances of an electric motor as a DC-DC boost converter. Such a solution has an impact on the electric motor and on the design of the PIM, increasing costs and area occupation. The solution comprises accessing a star-point connection of the electric motor. This may be complex from the standpoint of design of the electric motor. Moreover, it affects safety and packaging.

Existing approaches for solving the problem are discussed in the documents listed hereinafter.

WO2021/169143A1 discloses a vehicle-mounted charger compatible with an AC charging pile and a DC charging pile. The vehicle-mounted charger comprises an AC-DC module, an internal DC bus, and a switching module, wherein: the AC-DC module is used for connecting to an AC charging pile, converting an alternating current into a direct current, and transmitting the direct current to the internal DC bus; the switching module is used for connecting to, according to switching instructions, a direct current supplied by the direct-current charging pile to an input end of an AC-DC module or to the internal DC bus; and the internal DC bus is connected to a vehicle load for charging the vehicle load.

US11165349B2 discloses backward-compatible charging circuits and methods for charging a battery to a relatively high voltage level, regardless of whether the charging station is able to supply power at such a relatively high voltage level. The circuitry and the methods can use the on-board charging system to supply a voltage-boosting path to increase the charging voltage from a legacy voltage level (for example, a relatively low voltage level) to a native voltage level (for example, a relatively high voltage level). When a native-voltage charging station charges the battery, the circuitry and the methods according to the embodiments discussed in the document can use a native-voltage path for supplying power, received from the native-voltage charging station, to the battery.

US11203267B2 discloses a dual-voltage charging-station system for an AC power supply and a mobile platform having a charging port that includes a charge coupler, an AC-to-DC converter, a cable, and a controller. The charge coupler has an AC pin and a DC pin, which are configured to engage with the respective AC and DC receptacles of the charging port. The conversion stage is connected to the charge coupler and to the AC power supply, converts the supply voltage to a DC charging voltage, and the DC pins receive the DC charging voltage.

DE102018006409A1 discloses an energy converter for coupling a DC electrical system to an AC or DC power source, with an AC terminal, which can be electrically coupled to an AC power source, an on-board electrical connection, which can be electrically coupled to the DC electrical system, an LLC converter, which is electrically coupled to the AC-voltage terminal and has a converter inductance, and a rectifier unit, which is electrically coupled to the LLC converter and to the on-board power-supply terminal and comprises at least one rectifier element and a DC-voltage terminal, which is electrically coupled to the rectifier unit and can be electrically coupled to the DC supply.

EP3942671A1 discloses a battery charging system.

### Object and summary of the invention

The object of one or more embodiments is to contribute to providing an improved solution as referred to above.

According to one or more embodiments, such an object can be achieved via a method that will present the characteristics outlined in the ensuing claims.

One or more embodiments regard a corresponding system.

A battery-charging system for charging a battery electric vehicle (BEV) may provide an example of such a system.

The claims form an integral part of the technical teaching provided herein with reference to the embodiments.

One or more embodiments integrate a DCBC module within an integrated dual-charge module (IDCM) that comprises an OBCM.

One or more embodiments facilitate significant reduction in costs and occupation of space of the charging system in BEVs.

One or more embodiments combine a DCBC module and an OBCM in a single module configured for supporting both AC charging and DC boost charging.

One or more embodiments eliminate from the system the presence of a stand-alone DCBC module.

One or more embodiments advantageously exploit the same power electronics, measurements, controls, and output connectors of the OBCM to carry out DCBC functions.

One or more embodiments facilitate realization of a DCBC module (for example, a 70-kW one) integrating it in an IDCM (for example, a 22-kW one).

One or more embodiments advantageously exploit the existing cooling systems and ducting.

One or more embodiments may be applied to any BEV that has a battery voltage rating higher than the voltage limit supplied by the DC charging station.

### Brief description of the various views of the drawings

One or more embodiments will now be described, by way of non-limiting example, with reference to the annexed drawings, wherein:
Figure 1 is a diagram exemplifying a charging system according to one or more embodiments;
Figure 2 is a diagram exemplifying a portion of the diagram of Figure 1;
Figure 3 is a diagram exemplifying an alternative embodiment of the portion of diagram of Figure 1 exemplified in Figure 2;
Figures 4 to 6 are diagrams exemplifying portions of the diagram of Figure 1 that can be used also in the diagram of Figure 7;
Figure 7 is a diagram exemplifying an alternative charging system according to one or more embodiments;
Figures 8 to 12 are diagrams exemplifying portions of the diagram represented in Figure 7;
Figure 13 is a diagram exemplifying an alternative embodiment of the portion of diagram of Figure 7 exemplified in Figure 12;
Figure 14 is a diagram exemplifying a portion of the diagram of Figure 7;
Figure 15 is a diagram exemplifying an alternative embodiment of the portion of diagram of Figure 7 exemplified in Figure 14;
Figures 16A and 16B are diagrams exemplifying a vehicle according to the present description that is connected up to one or more charging stations; and
Figure 17 is a diagram exemplifying a variant embodiment.

In the various figures, corresponding references and symbols generally refer to corresponding parts, except where otherwise specified.

The figures have the purpose of illustrating clearly the relevant aspects of the embodiments and are not necessarily drawn to an exact scale.

The edges of the characteristics represented in the figures do not necessarily indicate the end of the extension of each of said characteristics.

### Detailed description of the invention

In the ensuing description, one or more specific details are illustrated in order to enable an in-depth understanding of examples of embodiments of the description. The embodiments may be obtained also without one or more specific details, or with other methods, components, materials, etc. In other cases, known structures, materials, or operations, are not illustrated or described in detail so that certain aspects of the embodiments will not be obscured.

Reference to "an embodiment" or "one embodiment" in the framework of the present description is intended to indicate that a particular configuration, structure, or characteristic described in relation to the embodiment is comprised in at least one embodiment. Consequently, phrases such as "in an embodiment" or "in one embodiment" that may be present in one or more points of the present description do not necessarily refer to one and the same embodiment.

Moreover, particular conformations, structures, or characteristics may be combined in any adequate way in one or more embodiments.

The drawings are in a simplified form and are not at an exact scale.

In the annexed figures, corresponding parts or elements are designated by the same references/numbers, except where otherwise specified, and, for reasons of brevity, a corresponding description will not be repeated for each and every figure.

The references used herein are provided purely for convenience and hence do not define the extent of protection or the scope of the embodiments.

For brevity, in what follows one and the same reference may be used to indicate both a node/line in a circuit and a signal that may appear at that node/line.

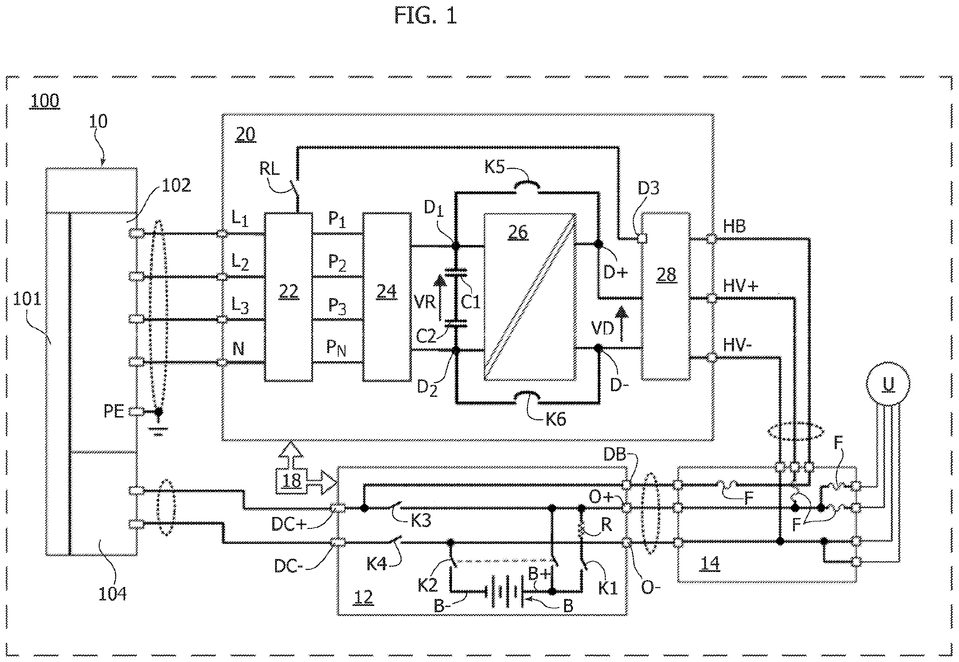

As exemplified in Figure 1, an electronic system 100 for charging a battery (for example, on board a BEV) comprises:
a charging port 10 (e.g., an electrical socket) configured to be coupled via an interface 101 (e.g., according to an interface known from standard such as the Combined Charging System - CCS2 - and/or the GB/T) to an electrical socket or connector (e.g., provided by an electrical charging station, in a way in itself known) to receive electrical energy therefrom, the port 10 comprising an AC charging portion or port 102 and a DC charging portion or port 104, the port 10 being configured to interact with a battery system B of the BEV;
a first battery-charging unit 12 (e.g., a high-voltage battery system - HVBS) comprising supply nodes DC+, DC- and an electrically chargeable battery B (e.g., with 800-V rated voltage) having a positive battery terminal B+ and a negative battery terminal B-, the battery being configured to be charged for storing electrical energy when coupled to an electrical supply source, the first battery-charging unit 12 being coupled to the DC charging portion 104 of the charging port 10 via supply nodes DC+, DC- to receive therefrom a DC supply voltage that is adequate with respect to the voltage level of the battery B so as to charge (e.g., directly) the battery B;
a second battery-charging unit 20 (for example, an IDCM or an OBCM) coupled to the AC charging portion 102 of the charging port 10 to receive an AC supply voltage via one or more input nodes L1, L2, L3, N, the charging unit 20 being configured to supply a regulated DC voltage to the output nodes HV+, HV-, the regulated output voltage being supplied at a regulated DC voltage level on the basis of the AC supply voltage received;
a power-distribution center (PDC) 14 coupled to the first and second charging units 12, 20 to collect the regulated voltage level HV+, HV-, supplied thereby at a first supply-voltage level or at a second supply-voltage level and supply it to user circuitry, such as a battery pack B of the BEV; and
control circuitry 18 coupled to the first and second charging units 12, 20 and configured to control operation of the latter, as discussed in what follows.

As exemplified in Figure 1, the PDC 14 comprises:
a first electrical path that couples the DC booster node DB of the first charging unit 10 to the booster node HB of the second charging unit 20 (e.g., via a fuse F),
a second electrical path that couples the positive output node O+ of the first charging unit 12 to the positive output node HV+ of the second charging unit 20 (e.g., via a further fuse F); and
a third electrical current path that couples the negative output node O- of the first charging unit 12 to the negative output node HV- of the second charging unit 20.

As exemplified in Figure 1, the AC charging portion 102 of the charging port 10 comprises a plurality of contacts (e.g., five) coupled to respective first L1, second L2, third L3, and fourth N input nodes of the second charging circuit 20, and a contact (e.g., the contact designated by PE) coupled to ground.

As exemplified in Figure 1, the second charging unit 20 comprises:
AC supply nodes, L1, L2, L3, N, configured to receive an AC supply voltage from the AC charging portion 102;
DC output nodes HV+, HV- configured to supply a regulated DC voltage VD; and
a booster node HB coupled to the first charging unit 12, as discussed in what follows.

As exemplified in Figure 1, the second charging unit 20 comprises an on-board charging module (OBCM) 22, 24, 26, 28, comprising:
an EMI filter 22 coupled to the AC supply nodes L1, L2, L3, N and comprising passive elements (e.g., such as inductors and capacitors) to filter out noise and electromagnetic interference (EMI), the EMI filter 22 being configured to supply a filtered voltage to the nodes P1, P2, P3, PN, for example so as to provide both a common-mode filter and a differential filter;
power-factor-correction (PFC) circuitry 24 coupled to the EMI filter 22 via the PFC input nodes P1, P2, P3, PN to receive the filtered voltage therefrom, the PFC circuitry 24 being configured to apply a rectification operation to the filtered voltage, supplying a rectified voltage (e.g., such as a (rough) DC voltage with a superimposed AC ripple) as a voltage drop VR across a positive node D1 and a negative node D2;
a capacitive branch C1, C2 coupled between the nodes D1, D2 of the PFC circuitry 24;
a DC-DC converter circuit 26 (preferably insulated) coupled, via the PFC nodes D1, D2, to the PFC circuitry 24 and to the capacitive branch C1, C2 to receive the converted voltage VR, the DC-DC converter circuit 26 being configured to apply a DC conversion to the voltage VR, consequently supplying a regulated DC voltage VD across the output nodes D+, D- of the DC-DC converter circuit 26; and
a further EMI filter 28 set between the output nodes D+, D- of the DC-DC converter circuit 26 and configured to apply a further EMI-filtering operation 28 to the regulated DC voltage VD, supplying a filtered output voltage (and/or current) to the output nodes HV+, HV- of the second charging unit 20.

As exemplified in Figure 1, the further EMI filter 28 is set also at the booster node HB, coupled to the first charging unit 12, and has a node D3 coupled thereto so as to receive the DC voltage at input to the first charging unit 12 when the latter is at a first voltage level lower than the level for charging the battery B, as discussed in what follows.

As exemplified in Figure 1, the second charging unit 20 further comprises a set of switches RL (e.g., a set of relays; the set RL is represented for simplicity as a toggle switch in Figure 1), configured to couple selectively, via a dedicated electrical line, the node D3 of the EMI filter 28 coupled to the booster node HB of the second charging unit 20 to the PFC circuitry 24 (e.g., via the EMI output filter 28) in response to coupling of the DC portion of the charging port 104 to an EVSE (e.g., via the corresponding socket), which is configured to supply a first voltage level (e.g., 400 V) lower than the voltage rating of the battery, as discussed in what follows; and
a set of contactors K5, K6, comprising:
a first contactor K5 set between a first (e.g., positive) output node D+ of the DC-DC converter 26 and a first (e.g., positive) node D1 of the PFC circuitry 24 of the second charging unit 20, and
a second contactor K6 set between an output node D- of the DC-DC converter 26 and a second node D2 of the PFC circuitry 24 of the second charging unit 20.

For instance, the contactors K5 and K6 may be electronically controlled mechanical switches that can be selectively switched ON (i.e., closed, with a current path through them rendered conductive) or switched OFF (i.e., opened, with a current path through them rendered nonconductive) for selectively coupling the output nodes D1, D2 of the DC-DC converter 26 to the PFC output nodes D1, D2, in response to coupling of the DC charging portion 104 of the charging port 10 to an EVSE (e.g., via the corresponding socket) configured to supply a voltage at a first level (e.g., 400 V) lower than the voltage rating of the battery B, as discussed in what follows.

As exemplified in Figure 1, the DC charging portion 104 of the port 10 comprises two contacts coupled to the respective first DC+ and second DC- supply nodes of the first charging unit 12 for supplying the DC supply voltage thereto.

As exemplified in Figure 1, the first charging unit 12 comprises:
a DC booster node DB coupled to the booster node HB of the second charging unit 20 (e.g., via the PDC 14);
a positive output node O+ and a negative output node O- coupled to the PDC 14 for supplying thereto a voltage stored in the electrically charged battery B;
a set of switches K1, K2, K3, K4 comprising:
   a first switch K1 set between a first terminal of the battery and the positive node O+ (e.g., via the resistive element R) of the first charging unit 12;
   a second switch K2 set between a second terminal of the battery and the negative node O- of the first charging unit 12;
   a third switch K3 set between the positive input node DC+ and the positive output node O+ of the first charging unit 12; and
   a fourth switch K4 set between the negative input node DC- and the negative output node O- of the first charging unit 12.

As exemplified in Figure 1, the set of switches K1, K2, K3, K4 of the first charging unit 12, as well as the set of switches RL and of contactors K5, K6 of the second charging unit 20, are coupled to the control unit 18 and are configured to be driven between an OFF (or open, nonconductive) state and an ON (or closed, conductive) state on the basis of control signals supplied by the control unit 18.

For instance, the control unit 18 may comprise control circuitry, such as a microcontroller.

It may be noted that the control unit 18 is represented in Figure 1 as external to the first charging unit 12 and the second charging unit 20 purely for purposes of illustration.

In one or more embodiments, for example, the control unit may be integrated in one or both of the charging units 12, 20 or again may represent control functions shared by various components.

In the case where the charging port 10 is coupled to a charging station configured to provide AC charging, a method for charging the battery B comprises:
- driving the first contactor K5 and the second contactor K6 of the second charging unit 20 so that they are switched OFF;
- driving the third and fourth switches of the first charging unit 12 so that they are switched OFF;
- driving the second switch K2 (and the first switch K1) of the first charging unit 12 so that it is switched ON, connecting the negative terminal B- of the battery B to the negative output node O- and the positive terminal B+ of the battery B to the positive output node O+;

- driving the set of switches RL so that they are switched OFF;
- converting the AC supply supplied by the AC portion 102 of the charging port 10 to a regulated DC voltage VD via the second charging unit 20; and
- charging the battery B (e.g., up to 800 V) by supplying to the positive and negative nodes O+, O- of the first charging unit the DC voltage VD across the nodes HV+, HV- of the second charging unit 20, for example via the PDC 14.

In the case where the DC charging station to which the charging port 10 is coupled is an EVSE that supplies a DC voltage at the second voltage level for charging the battery B (e.g., an 800-V battery), a method for charging the battery B via the system exemplified in Figure 1 comprises:
- driving (e.g., via control signals supplied by the control unit 18) the first and second contactors K5, K6 of the second charging unit 20 so that they are switched OFF;
- driving the third switch K3 of the first charging unit 12 so that it is switched ON into a closed state in order to couple the positive input node DC+ to the positive DC output node O+;
- driving the fourth switch K4 of the first charging unit 12 so that it is switched ON in order to couple the negative input node DC- to the negative output node O- of the first charging unit 12;
- driving the second switch K2 (and the first switch K1) of the first charging unit 12 so that it is switched ON into the closed state, connecting the negative terminal B- of the battery B to a negative output node O- and the positive terminal B+ of the battery B to the positive output node O+;
- driving the set of switches RL so that they are switched OFF into the open state; and
- charging the battery by supplying to the positive and negative nodes O+, O- of the first charging unit 12 the DC voltage across the nodes DC+, DC- of the first charging unit 12, for example via the DC charging portion 104 of the charging port 10.

In the case where the DC charging station to which the charging port 10 is coupled is an EVSE that supplies a DC voltage at a first voltage level (e.g., of approximately 400 V, up to a maximum of 500 V) lower than the second charging voltage level of the battery B, a method for charging the battery B via the system exemplified in Figure 1 comprises:
- driving (e.g., via control signals supplied by the control unit 18) the first and second contactors K5, K6 of the second charging unit 20 so that they are switched ON, thus bypassing the insulated DC-DC converter unit 26;
- driving the third switch K3 of the first charging unit 12 so that it is switched OFF into an open state in order to couple the positive input node DC+ to the DC booster node DB; and
- driving the fourth switch K4 of the first charging unit 12 so that it is switched ON in order to couple the negative input node DC- to the negative output nodes O- of the first charging unit 12 and HV- of the second charging unit 20 via the PDC 14;
- driving the second switch K2 (and the first switch K1) of the first charging unit 12 so that it is switched ON into the closed state, connecting the negative terminal B- of the battery B to a negative output node O- and the positive terminal B+ of the battery B to the positive output node O+;
- driving the set of switches RL so that they are switched ON into the closed state;
- supplying the DC input voltage received from the DC portion 104 of the charging port 10 (e.g., a voltage of approximately 400 V) to the input nodes of the PFC circuitry 24 via the booster node HB and the negative output node HV- coupled thereto, and via the booster node HB that is coupled to the DC booster node DB of the first charging unit, and carrying out a DC boost amplification (e.g., from 400 V to 800 V) via the PFC circuitry 24, supplying to the output nodes HV+, HV- of the second charging station 20 a DC boosted voltage to be applied (via connection of the switches K1, K2) to the battery B with the rated voltage of 800 V; and
- charging the battery by supplying to the positive and negative nodes O+, O- of the first charging unit 12 the DC voltage VD across the nodes HV+, HV- of the second charging unit 20, e.g., via the PDC 14.

As discussed previously, the presence of the booster nodes DB, HB and the way in which the contactors K5, K6, the switches K1, K2, K3, K4, and the set of switches RL are driven facilitate charging to 800 V of a battery using a charging station with a voltage rating of 400 V, such as an EVSE.

It may be noted that, while the set of switches RL is illustrated in Figure 1 as a separate component, this representation is provided purely by way of non-limiting example. For instance, the set of switches RL may be integrated in circuit blocks such as the EMI filter 22 or the PFC circuitry 24, as discussed in what follows.

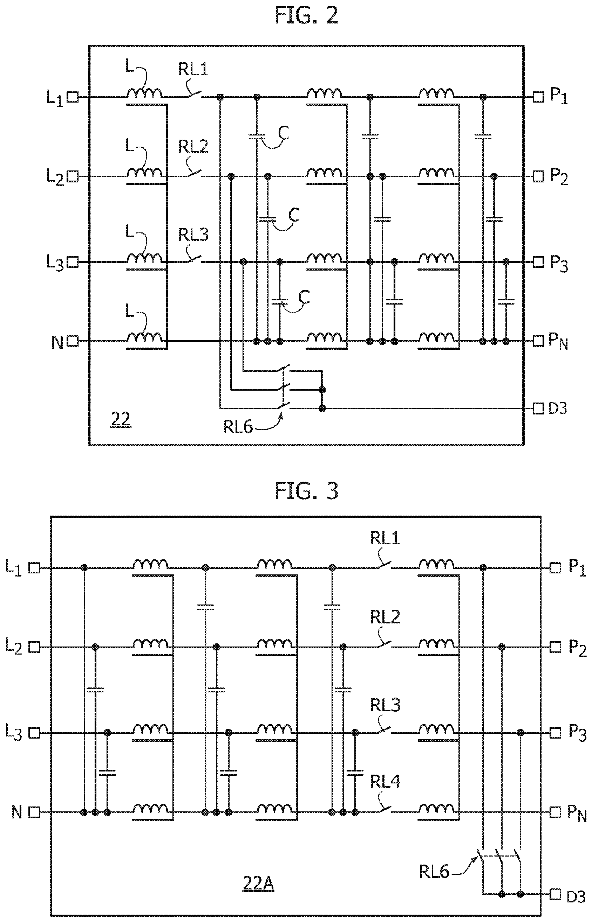

As exemplified in Figure 2, the EMI filter 22 comprises the set of switches RL integrated within it. For instance, the EMI filter 22 comprises:
passive electronic components L, C, comprising inductors L (e.g., arranged in series to one another) and capacitors C (e.g., arranged in series and in parallel to one another), the reactive circuitry L, C being configured to filter the voltage (and/or the current) received at the input nodes P1, P2, P3, PN;
a first switch RL1 set between the first input node L1 and the first output node P1 of the EMI filter 22;
a second switch RL2 set between the second input node L2 and the second output node of the EMI filter 22; and
a third switch RL3 set between the third input node L3 and the third output node P3 of the EMI filter 22,
wherein the first RL1, second RL2, and third RL3 switches in the EMI filter 22 are configured to couple selectively the input nodes L1, L2, L3 of the second charging unit 20 to the input nodes P1, P2, P3, PN of the PFC circuitry 24; and
a further set of switches RL6 configured to couple selectively the input nodes P1, P2, P3 of the PFC circuitry 24 to the booster node HB of the second charging unit 20 via the EMI filter 28, the further set of switches RL6 being connected to the switches RL1, RL2, RL3.

As exemplified in Figure 3, in an alternative arrangement, the set of switches RL comprises the first switch RL1, the second switch RL2, and the third switch RL3, and a fourth switch RL4, which are connected between a last set of inductors L and are connected to the respective PFC nodes P1, P2, P3, PN, with the further set of switches RL6 also connected to the PFC nodes P1, P2, P3 and to the first RL1, second RL2, and third RL3 switches.

A device as exemplified in Figure 3 may provide an efficiency that is increased as compared to the efficiency of the device illustrated in Figure 2, thanks to the elimination of power losses that would otherwise be present in the passive components L, C.

For instance, the device exemplified in Figure 3 may be cheaper to implement, given that it involves a lower number of components (for example, inductors) or a reduced area occupation by the set of switches RL (for example, given that it uses capacitors with a low voltage rating).

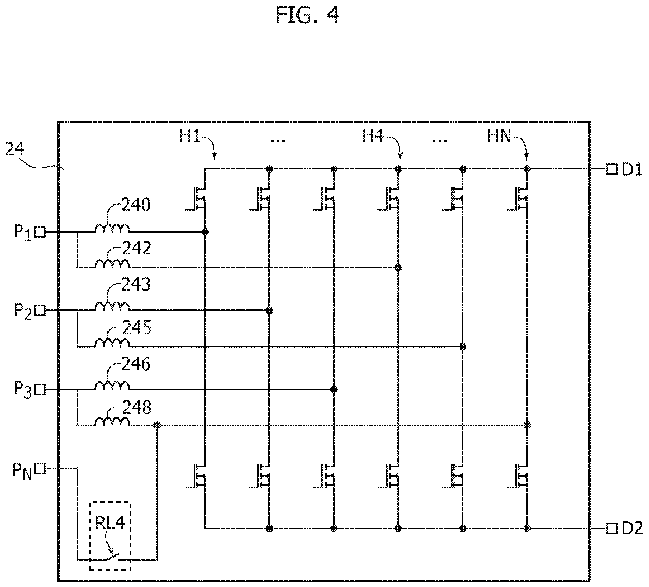

As exemplified in Figure 4, the PFC circuitry 24 comprises a plurality of switches in half-bridge configuration H1, ..., H4, ..., HN, each half-bridge H1, ..., H4, ..., HN, comprising pairs of switching transistors (e.g., MOSFETs) that form a branch of the circuitry 24; at least one branch is coupled to each of the input nodes P1, P2, P3, PN of the PFC circuitry 24 via a set of inductors 240, 242, 243, 245, 246, 248. For instance, two branches H1, H4 are coupled to the first input node P1 via inductors 240, 242.

As exemplified in Figure 4, the branches of the PFC circuitry 24 are configured to be controlled (e.g., via control signals supplied by the control unit, which is not illustrated in Figure 2) for converting the (AC or DC) filtered voltage received from the EMI filter 22 to a rectified DC voltage VR (e.g., boosted with respect to the input voltage) supplied across the output nodes D1, D2 of the PFC circuitry 24.

As exemplified in Figure 4, the PFC circuitry 24 comprises six inductors 240, 242, 243, 245, 246, 248 and one and the same number of branches, this number being provided purely by way of non-limiting example. For instance, the PFC circuitry 24 may comprise six branches with a current of 16 A for each branch, thus supplying a rectified power of approximately 22 kW in the AC-to-DC conversion.

As exemplified in Figure 4, the fourth switch RL4 of the set of switches RL may be integrated in the PFC circuitry 24, in particular when this is used together with the EMI filter 22 exemplified in Figure 2, whereas it may be replaced by an electrical-connection line in the case where the PFC circuitry 24 is coupled to the EMI filter 22A exemplified in Figure 3.

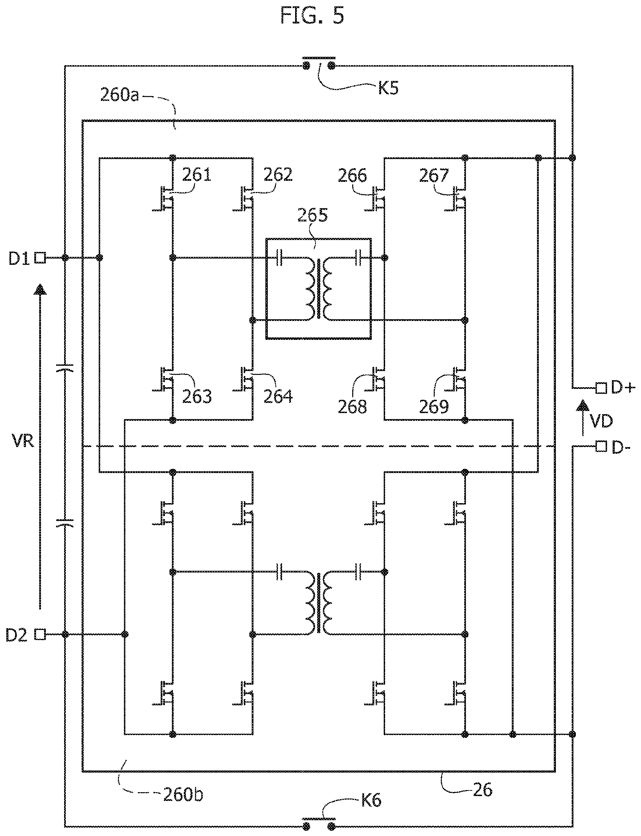

As exemplified in Figure 5, the DC-DC converter 26 comprises a bidirectional DC-DC converter, comprising:
high-side circuitry 260A and low-side circuitry 260B, which are coupled to a positive input node D1, to the positive output node D+, to the negative input node D2, and to the negative output node D-.

For instance, each of the two portions 260A, 260B of the DC-DC converter 26 comprises a first set of switching transistors 261, 262, 263, 264, a transformer 265, and a second set of switching transistors 266, 267, 268, 269.

As exemplified in Figure 5, the transformer 265 can insulate the nodes D+, D- from the input side D1, D2 of the DC-DC converter 26.

For instance, the switching transistors 261, 262, 263, 264, in combination with the transformer 265, can be controlled via control circuitry (e.g., a microcontroller integrated in the OBCM) to control conversion of the rectified DC voltage VR to a further regulated DC output voltage VD (e.g., to adapt the voltage gain) on the basis of the rectified voltage VR supplied by the PFC circuitry 24.

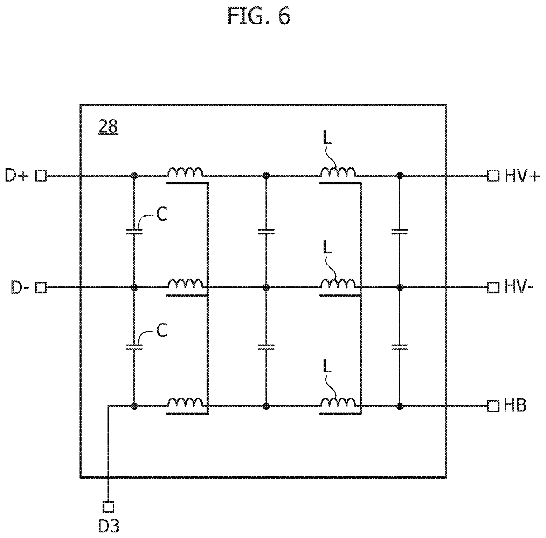

As exemplified in Figure 6, the further EMI filter comprises further passive elements L, C (e.g., a plurality of LC circuit networks).

As exemplified herein, in addition to operation of the switches K1, K2, K3, K4 as discussed previously, operating the system exemplified in Figures 1 to 6 comprises alternatively:
in response to the AC portion 102 of the charging port 10 being coupled to an AC source, switching ON a first subset of switches L1, L2, L3, L4, while switching OFF the further set of switches RL6, moreover switching OFF the contactors K5, K6; consequently, the battery B is charged via the AC voltage; or
in response to the DC portion 104 of the charging port 10 being coupled to an EVSE configured to supply a voltage at a first level (e.g., 400 V), switching OFF the first subset of switches RL1, RL2, RL3, RL4 and switching ON the second subset of switches RL6, as well as switching ON the contactors K5, K6; consequently, the battery B is charged by boosting the DC voltage supplied to the DC socket via the PFC circuitry 24 that supplies a boosted voltage via the booster node HB coupled to the node D3 of the EMI filter 28.

For instance, the set of switches RL facilitates 22-kW AC-power charging in three-phase mode. In this condition, the AC voltage is converted into a regulated DC voltage via the OBCM 20 to charge the battery B to 800 V.

Alternatively, for example, in response to coupling of the AC charging port 102 to the AC voltage source (in single-phase mode), the second switch RL2 and the third switch RL3 are switched OFF, while the first switch RL1 and the fourth switch RL4 are switched ON.

As exemplified in Figures 1 to 5, for example:
in response to the DC portion 104 of the charging port 10 being coupled to an EVSE that supplies a voltage at a first level (e.g., 400 V), the switch K3 is switched OFF, while the switches K2, K4, as well as the contactors K5 and K6 are switched ON; the switches of the further set of switches RL6 are switched ON to connect the DC EVSE to the input of the PFC circuitry 24, while the switches RL1, RL2, RL3, RL4 of the first set of switches are switched OFF for safety reasons.

For instance, by closing the contactors K5, K6, the DC-DC converter 26 is bypassed, and the DC voltage from the EVSE is boosted via the PFC circuitry 24 so as to reach a higher voltage, thus facilitating charging to 800 V of the battery B using a 400-V DC charging voltage.

For instance, in the case where the EVSE to which the charging port 10 is coupled is sized for supplying a maximum DC voltage of approximately 500 V across the nodes DC+, DC-, exploiting boost activation via the PFC circuitry 24 coupled to the input nodes via the switches RL, as discussed in the present description, may make it possible to reach a power of 48 kW to charge the battery B.

In an alternative scenario, it is possible to use both the PFC circuitry 24 and the DC-DC converter 26 for providing a further boost to the DC voltage across the nodes DC+, DC- when they are coupled to an EVSE configured to supply DC voltage at a second level (e.g., 400 V) lower than a first level (e.g., 800 V) to which the battery B is charged.

For instance, in the above alternative scenario, it is possible to exploit a further power (e.g., a further 22 kW) using the DC-DC converter 26 in addition to the converter according to the current solution, thus facilitating reaching of 70 kW of total power to be supplied to the battery B.

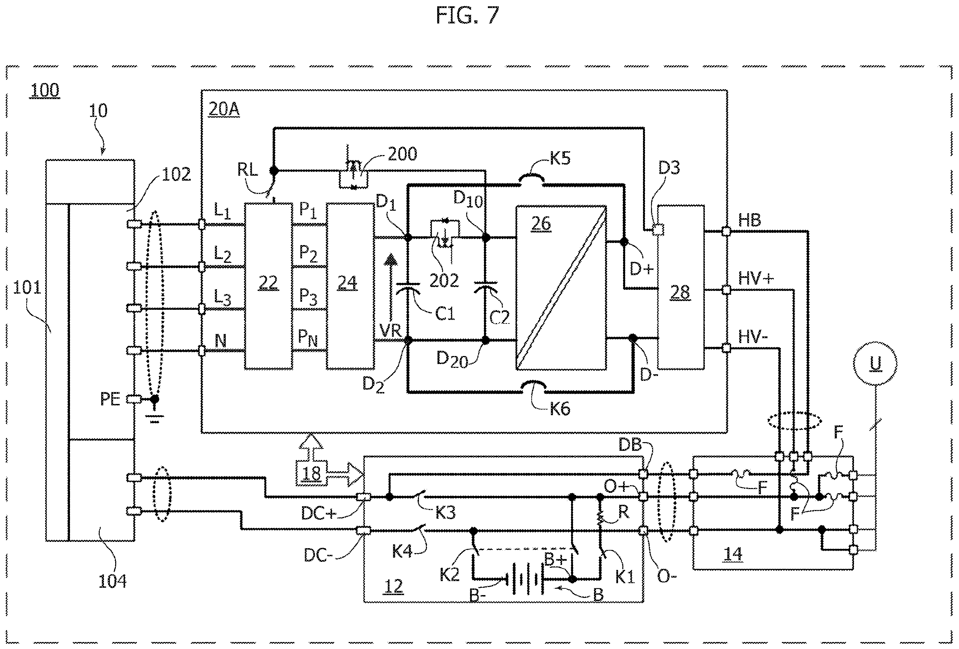

As exemplified in Figure 7, a second alternative charging unit 20A comprises, in addition to the blocks already described previously:
a first coupling switch 200 set between the node D3 coupled to the booster node HB of the second charging unit 20A and a positive input node D10 of the DC-DC converter 26;
a second coupling switch 202 set between the positive output node D1 of the PFC circuitry 24 and a positive input node D10 of the DC-DC converter 26;
a first capacitor C1 set between the positive output node D1 of the PFC circuitry 24 and a negative output node D2 of the PFC circuitry 24; and
a second capacitor C2 set between the positive input node D10 of the DC-DC converter 26 and a negative input node D20 of the DC-DC converter 26 (which corresponds to the negative output node D2 of the PFC circuitry 24).

As exemplified in Figure 7, the first C1 and second C2 capacitors may have capacitances equal to those of the capacitors C1, C2 exemplified in Figure 1.

In the case where the charging port 10 is coupled to a charging station configured to providing AC charging, a method for charging the battery B via the system exemplified in Figure 7 comprises:
driving the first contactor K5 and the second contactor K6 of the second charging unit 20A so that they are switched OFF;
driving the third switch K3 and the fourth switch K4 of the first charging unit 12 so that they are switched OFF;
driving the second switch K2 (and the first switch K1) of the first charging unit 12 so that it is ON, connecting the negative terminal of the battery B to the negative output node O- and the positive terminal of the battery B to the positive output node O+;
driving the set of switches RL so that they are switched OFF;
driving the first coupling switch 200 so that it is switched OFF;
driving the second coupling switch 202 so that it is switched ON in order to couple the output node D1 of the PFC circuitry 24 to the input node D10 of the DC-DC converter circuit 26, while any voltage that may be present on the booster node is prevented from interfering (in such a way that the DC voltage at the nodes DC+, DC- of the charging port 10 will be zero, thus facilitating safety of the vehicle);
converting the AC supply provided by the AC portion 102 of the charging port to a regulated voltage VD via the second charging unit; and
charging the battery (e.g., up to 800 V) by supplying to the positive and negative nodes O+, O- of the first charging unit 12 the DC voltage VD across the nodes HV+, HV- of the second charging unit 20, for example via the PDC 14.

In the case where the DC charging station to which the charging port 10 is coupled is an EVSE for example configured to supply a DC voltage of approximately 400 V, the battery-charging method comprises:
driving the contactors K5, K6 of the second charging unit 20A so that they are switched ON, thus bypassing the DC-DC converter unit 26 via connection of the output nodes D1, D2 of the PFC circuitry 24 to the output nodes D+, D- of the DC-DC converter circuit 26;
driving the third switch K3 of the first charging unit 12 so that it is switched OFF into an open state in order to couple to the positive input node DC+ the DC booster node DB, and driving the fourth switch K4 of the first charging unit 12 so that it is switched ON (i.e., into the closed state) in order to couple the negative input node DC- to the negative node O-;
driving the second switch K2 (and the first switch K1) of the first charging unit 12 so that it is switched ON into the closed state, connecting the negative terminal B- of the battery B to the negative output node O- and the positive terminal B+ of the battery B to the positive output node O+;
driving the set of switches RL so that they are switched ON (i.e., into the closed state);
driving the first coupling switch 200 so that it is switched ON;
driving the second coupling switch 202 so that it is switched OFF;
supplying the output of the received DC input voltage of the DC portion of the charging port 10 (e.g., a voltage of approximately 400 V) to the input nodes of the PFC circuitry 24 and of the DC-DC converter circuit 26, via the booster node HB (coupled to the node D3 of the EMI output filter 28) and the negative output node HV- that are coupled to the PFC circuitry 24 and, via the EMI output filter 28, to the booster node HB, which is thus coupled to the DC booster node DB of the first charging unit 12;
performing a DC boost amplification (e.g., from 400 V to 800 V) via the PFC circuitry 24 and the DC-DC converter 26, supplying at the output nodes HV+, HV- of the second charging station 20 a DC boosted voltage to be applied via the connection of the switches K1, K2 to the battery B; and
charging the battery (e.g., up to 800 V) by supplying to the positive and negative nodes O+, O- of the first charging unit 12 the DC voltage VD across the nodes HV+, HV- of the second charging unit 20, for example via the PDC 14.

As exemplified in Figure 7, when the socket from the DC EVSE is connected to the portion 104 of DC charging port, the DC voltage across the nodes DC+, DC- is supplied to the input nodes P1, P2, P3, PN, via a set of switches RL (e.g., via the EMI filter 22) and to the DC-DC converter stage 26 via the first coupling switch 200, which is switched ON.

For instance, the second contactor K6 provides a common return path (to the negative node HV- of the second charging unit 20A) both for the PFC circuitry 24 and for the DC-DC converter 26. In this way, the output nodes D1, D2 of the PFC circuitry 24 are coupled to the battery B via the first contactor K5 and the second contactor K6 for supplying thereto the DC boosted voltage VD.

As exemplified in Figure 7, the DC-DC stage 26 can also operate as DC boost conversion stage (e.g., in parallel with the PFC circuitry 24) given that its output nodes D+, D- are already coupled to the battery via the PFC 14, as exemplified in Figure 7.

For instance, the DC-DC converter 26 may comprise a unidirectional or bidirectional DC-DC converter 26, as discussed in what follows.

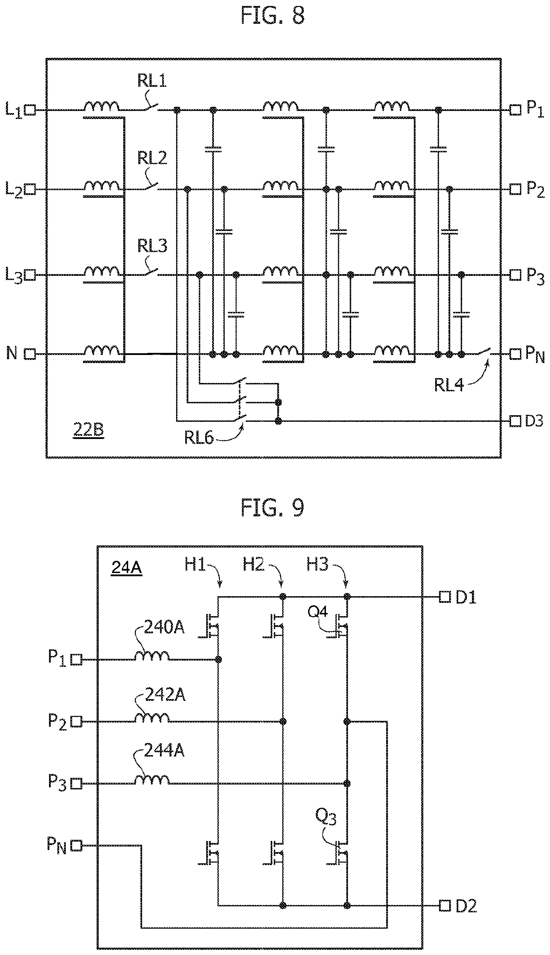

As exemplified in Figure 8, the set of switches RL may be integrated in an alternative EMI filter 22B that comprises:
a first subset of switches RL1, RL2, RL3 coupled, respectively, to the first L1, second L2, and third L3 AC input nodes and configured to couple selectively thereto, when they are switched ON, the input nodes P1, P2, P3, PN of the PFC circuitry 24;
a second subset of switches RL6, configured to couple selectively the input nodes P1, P2, P3, PN of the PFC circuitry 24 to the node D3 of the EMI filter 28, which is coupled to the booster node HB of the second charging circuit 20, the second subset of switches RL6 being connected to the first subset of switches RL1, RL2, RL3; and
a further subset of switches RL4 coupled to the fourth AC input node and configured to connect the fourth input node PN to the PFC circuitry, the further subset of switches RL4 being configured to couple selectively, when they are switched ON, the fourth input node PN of the PFC circuitry 24 to the fourth input node N of the AC port 102.

As exemplified in Figure 9, an alternative PFC circuitry 24A comprises input nodes P1, P2, P3, PN coupled to three branches H1, H2, H3, that comprise half-bridges of switching transistors configured to be driven (e.g., via a microcontroller 18 integrated in the second charging unit 20, 20A) so as to supply the rectified voltage across the output nodes D1, D2. For instance, by applying (in a way in itself known) a pulse-width modulation (PWM) to the switching transistors Q3, Q4 of a third branch H3, when the PFC circuitry 24A is coupled to the EMI filter 22B as exemplified in Figure 8, it is possible to obtain improved performance in terms of electromagnetic compatibility. For instance, this is the result of the fact that the EMI filter 22A can also be used to have a further common-mode noise reduction and a differential-mode filtering for the PFC circuitry 24A.

For instance, a second battery-charging unit 20 comprises an alternative configuration 22B of the EMI filter 22 connected to the PFC circuitry 24 and offers a two-phase AC charging and an AC charging in three-phase with neutral configuration, to support, for example, an unbalanced three-phase charging mode. This can facilitate a further filtering of the voltage and of noise on the current in the PFC circuitry 24A.

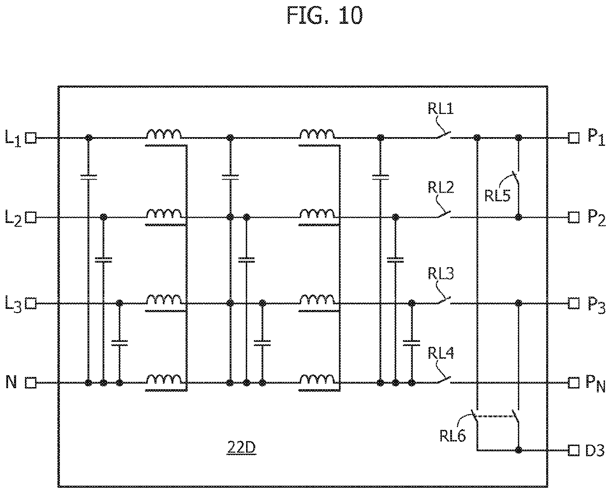

As exemplified in Figure 10, in a further alternative configuration, the EMI filter 22D comprises the first switch and the second switch, the third switch and the fourth switch RL1, RL2, RL3, RL4, a fifth switch RL5, set between the first PFC node P1 and the second PFC node P2, and a further set of switches RL6. As discussed previously, in response to coupling of the DC charging portion 102 of the charging port 10 to a DC EVSE, the switches RL1, RL2, RL3, RL4, RL5, RL6 are configured to couple the node D3 of the EMI filter 28 coupled to the booster node HB to the output nodes of the PFC circuitry (by closing the fifth switch RL5 and the second set of switches RL6 and keeping the switches RL1, RL2, RL3, RL4 open).

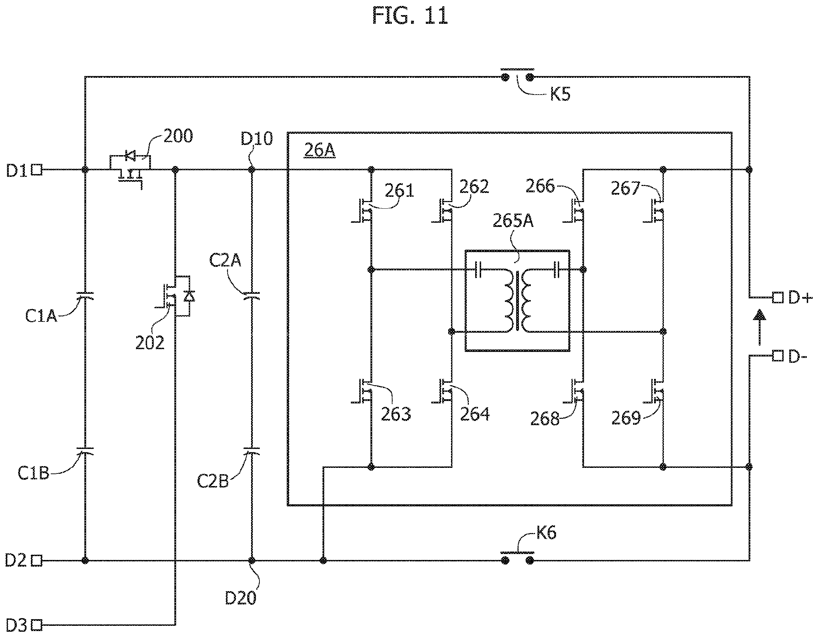

As exemplified in Figure 11, the (bidirectional or unidirectional) DC-DC converter 26A comprises the first and second sets of switching transistors 261, 262, 263, 264, the transformer 265A (plus the resonant capacitors) and the second set of switching transistors 266, 267, 268, 269.

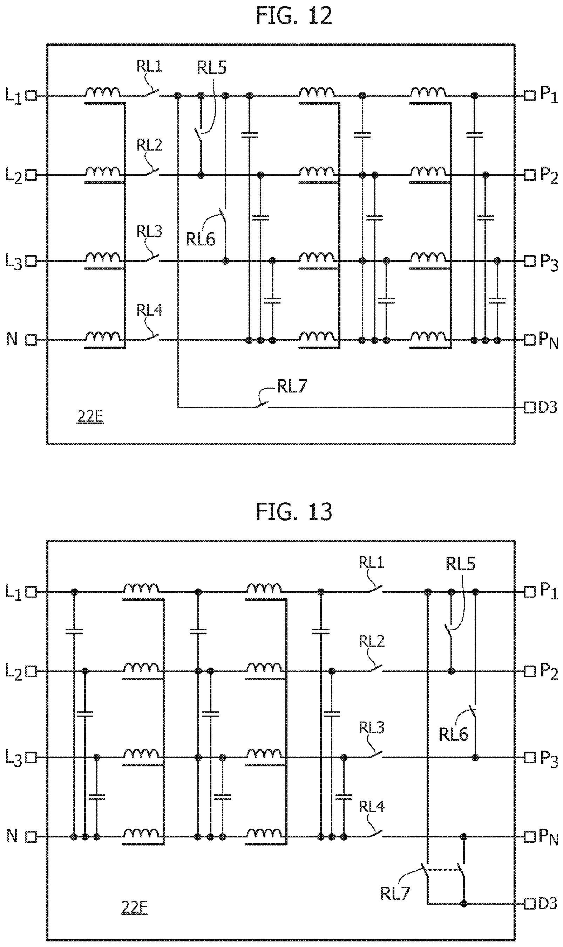

As exemplified in Figures 12 and 13, further alternative configurations of the EMI filter 22E, 22F comprise the first switch RL1, the second switch RL2, the third switch RL3, and the fourth switch RL4, as discussed previously, the fifth switch RL5, as discussed previously, together with:
a sixth switch RL6 set between the first PFC node P1 and the third PFC node P3; and
a seventh switch RL7 set between the first PFC node P1 and the node D3 of the EMI filter 28 that is coupled to the booster node HB.

These switches may be set upstream or downstream of the passive elements of the EMI filter, as exemplified in Figure 12 or Figure 13.

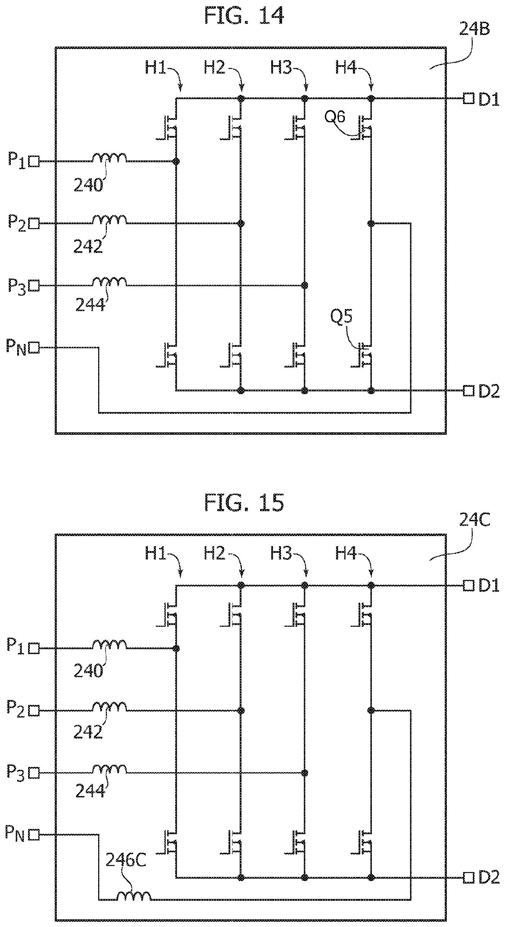

The EMI filter 22E as exemplified in Figure 12, may, for example, be configured to be coupled to a further alternative PFC circuit 24B exemplified in Figure 14.

For instance, the further alternative PFC circuitry 24B comprises input nodes P1, P2, P3, PN, coupled to four branches H1, H2, H3, H4 that comprise half-bridges of switching transistors configured to be driven (e.g., via the control unit, in a way in itself known) for supplying a rectified voltage across the PFC output nodes D1, D2.

For instance, by switching ON a switch Q5 of a fourth branch H4 when the PFC circuitry 24B is coupled to the EMI filter 22B as exemplified in Figure 12, it is possible to obtain improved performance in terms of electromagnetic compatibility, as a consequence of the fact that the EMI filter 22 can be used to have a further common-mode feedback and differential filtering for the PFC circuitry 24.

The further alternative EMI filter 22F exemplified in Figure 13 may be configured to be coupled to a further alternative PFC circuitry 24C exemplified in Figure 15.

For instance, the further EMI filter 22F comprises input nodes P1, P2, P3 and PN coupled to four branches H1, H2, H3, H4, comprising half-bridges of switching transistors configured to be driven (e.g., via the control unit of the second charging unit 20, 20A) for supplying the rectified voltage to the output nodes D1, D2, the PFC circuitry 24C moreover comprising a further inductance 246C set between the input node PN and a median point of the fourth branch H4.

For instance, by driving (in a way in itself known) the switches Q5, Q6 of the fourth branch H4 with a PWM when the PFC circuitry 24C is coupled to the DC booster node HB via the EMI filter 22F as exemplified in Figure 13 and the EMI output filter 28, it is possible to obtain improved performance in terms of power when the second charging unit 20 or 20A is used in DC booster mode for charging the battery B of the unit 12 up to the second voltage level (e.g., 800 V) by the portion 104 of the charging port 10 with DC EVSE at the first voltage level (e.g., 400 V).

For instance, the second charging unit can operate at a variety of power levels, such as with an 11-kW three-phase OBCM, which facilitates reaching of 35 kW of boosted power with an EVSE DC voltage of 500 V.

For instance, the contribution both of the PFC circuitry 24, 24A and of the insulated DC stage 26, 26A can reach between 24 kW/25 kW and 11 kW/10 kW, respectively.

The system 100 exemplified in Figure 7 may comprise the EMI filter 22D exemplified in Figure 10, the PFC circuitry 24A exemplified in Figure 9, the unidirectional or bidirectional DC-DC converter 26A exemplified in Figure 11, and the EMI output filter 28 exemplified in Figure 6.

For instance, such a set of circuit blocks 22D, 24A, 26A, 28 implemented in the second charging unit 20A may be made to operate in various modes, such as:
in a first AC charging mode, where the socket supplies a single-phase power of approximately 7.4 kW (e.g., with the PFC circuitry 24 configured to supply 230 V at 32 A), the control circuitry 18 is configured to drive the switches RL1, RL4 and RL5 so that they are switched ON (i.e., closed) and drive the switches RL2, RL3, RL6, as well as the contactors K5 and K6, so that they are switched OFF (i.e., opened); at the same time, the first coupling switch 200 is switched OFF, while the second coupling switch 202 is switched ON;
in a second AC charging mode, the AC port 102 receives a power of approximately 7.6 kW (e.g., equivalent to 240 V at 32 A), and the control circuitry 18 is configured to drive the switches RL1, RL4 and RL5 so that they are switched ON (i.e., closed) and the switches RL2, RL3, RL6, as well as the contactors K5-K6 so that they are switched OFF (i.e., opened); at the same time, the first coupling switch 200 is switched OFF, while the second coupling switch 202 is switched ON;
in a third AC charging mode, the AC port 102 receives power in three-phase mode at approximately 11 kW (e.g., equivalent to approximately 230 V at 16 A for each phase), and the control circuitry 18 is configured to drive the switches RL1, RL2, and RL3 so that they are switched ON (i.e., closed) and the switches RL4, RL5, RL6, as well as the contactors K5, K6, so that they are switched OFF (i.e., opened); at the same time, the first coupling switch 200 is switched OFF, while the second coupling switch 202 is switched ON; and
in a first DC boost charging mode, the DC port 104 receives approximately 35 kW (e.g., equivalent to approximately 500 V at 70 A_{DC}), the control circuitry 18 is configured to drive the switches RL1, RL2, RL3, and RL4 so that they are switched OFF (i.e., opened) and drive the switches RL5, RL6, as well as the contactors K5, K6, so that they are switched ON (i.e., closed); at the same time, the first coupling switch 200 is switched ON, while the second coupling switch 202 is switched OFF.

As may be appreciated by the person skilled in the branch, in using the block 26 exemplified in Figure 5 in the system exemplified in Figure 7, the input nodes of the block exemplified in Figure 5 are coupled to the nodes D1 and D2 via the nodes D10, D20.

The system 100 exemplified in Figure 7 comprises the EMI filter 22E exemplified in Figure 12, the PFC circuitry 24B exemplified in Figure 14, the DC-DC converter 26A exemplified in Figure 11, and the EMI output filter 28 exemplified in Figure 6.

For instance, by implementing the circuit blocks 22E, 24B, 26A, 28 in the second charging unit 20A, the latter may be operated in various modes, such as:
in a first AC charging mode, the AC port 102 receives a power of approximately 7.4 kW (e.g., equivalent to 230 VAC at 32 Arms), the control circuitry 18 being configured to drive the switches RL1, RL4, and RL5 so that they are switched ON (i.e., closed) and drive the switches RL2, RL3, RL6, RL7, as well as the contactors K5-K6, so that they are switched OFF (i.e., opened); at the same time, the control circuitry 18 is configured to drive the first coupling switch 200 so that it is switched OFF and drive the second coupling switch 202 so that it is switched ON;
in a second AC charging mode, the AC port 102 receives a power of approximately 11.5 kW (e.g., equivalent to 240 VAC at 48 Arms), the control circuitry 18 being configured to drive the switches RL1, RL4, RL5, and RL6 so that they are switched ON (i.e., closed) and drive the switches RL2, RL3, RL7, as well as the contactors K5-K6, that they are switched OFF (i.e., opened); the control circuitry 18 is further configured to drive the first coupling switch 200 so that it is switched OFF, and the second coupling switch 202 so that it is switched ON;
in a third AC charging mode, the AC port 102 receives a three-phase power of approximately 11 kW (e.g., equivalent to 230 VAC at 16 Arms for each phase), and the control circuitry 18 is configured to drive the switches RL1, RL2, RL3, and RL4 so that they are switched ON (i.e., closed) and drive the switches RL5, RL6, RL7, as well as the contactors K5-K6, so that they are switched OFF (i.e., opened); at the same time, the first coupling switch 200 is switched OFF, and the second coupling switch 202 is switched ON;
in a further DC boost mode, the DC port 104 receives a power of approximately 35 kW (e.g., equivalent to 500 V at 70 ADC), and the control circuitry 18 is configured to drive the switches RL1, RL2, RL3, and RL4 so that they are switched OFF (i.e., opened) and drive the switches RL5, RL6, RL7, as well as the contactors K5, K6, so that they are switched ON (i.e., closed); the control circuitry 18 is further configured to drive the first coupling switch 200 and the switch Q5 in the PFC circuitry 24B so that they are switched ON and drive the second coupling switch 202 so that it is switched OFF.

Implementation of the circuit blocks 22E, 24B, 26A, 28 in the second charging unit 20A can supply up to 50 kW of DC boost power using an 11-kW reference OBCM in a scenario in which the PFC circuitry 24B is configured to manage a higher current for each branch H1, H2, H3 (e.g., a current of 26 A for each branch instead of 16 A), supplying a DC boost power of approximately 39 kW (equivalent to 500 V multiplied by 26 A for the three branches H1, H2, H3), without having any potential impact on the insulated DC-DC stage 26A.

One or more embodiments may facilitate compliance with a variety of EVSE standards, such as EMEA 7.4 kW, NA 7.6 kW, and EMEA 11 kW.

In an alternative scenario, a way to reach a DC boost charging power of 50 kW using an 11-kW reference OBCM implements in the second charging unit the circuit blocks 22F exemplified in Figure 13, the block 24C exemplified in Figure 15, the block 26A exemplified in Figure 11, and the block 28 exemplified in Figure 6, where the PFC circuitry 24C is configured to manage, for example, a current of approximately 16 A for each branch H1, H2, H3 (including the inductances 240, 242, 244), and a current of 32 A for the branch H4 and the inductance 246C.

For instance, using such a circuit implementation of the second charging unit 20A, the latter may be operated in a variety of modes, for example:
in a first AC charging mode, single-phase EMEA 7.4 kW (e.g., corresponding to 230 VAC at 32 Arms), the control unit 18 is configured to drive the switches RL1, RL4, RL5 so that they are switched ON (i.e., closed) and drive the switches RL2, RL3, RL6, RL7, as well as the contactors K5 and K6, so that they are switched OFF (i.e., opened); at the same time, the first coupling switch 200 is switched OFF, and the second coupling switch 202 is switched ON;
in a second AC charging mode, single-phase NA 11 kW (e.g., corresponding to 240 VAC at 48 Arms), the control unit 18 is configured to drive the switches RL1, RL4, RL5, RL6 so that they are switched ON (i.e., closed) and drive the switches RL2, RL3, RL7, as well as the contactors K5 and K6, so that they are switched OFF (i.e., opened); at the same time, the first coupling switch 200 is switched OFF, and the second coupling switch 202 is switched ON;
in a third AC charging mode, three-phase EMEA 11 kW (corresponding to 230 VAC at 16 Arms) the control unit 18 is configured to drive the switches RL1, RL2, RL3, RL4 so that they are switched ON (i.e., closed) and drive the switches RL5, RL6, RL7, as well as the contactors K5 and K6, so that they are switched OFF (i.e., opened); at the same time, the first coupling switch 200 is switched OFF, and the second coupling switch 202 is switched ON; and
in a further DC boost charging mode at 50 kW (corresponding to 500 VDC at 100 ADC), the control unit 18 is configured to drive the switches RL1, RL2, RL3, RL4 so that they are switched OFF (i.e., opened), and drive the switches RL5, RL6, RL7, as well as the contactors K5 and K6, so that they are switched ON (i.e., closed); at the same time, the control unit 18 is configured to drive the first coupling switch 200 so that it is switched ON (i.e., closed) and the second coupling switch 202 so that it is switched OFF (i.e., opened).

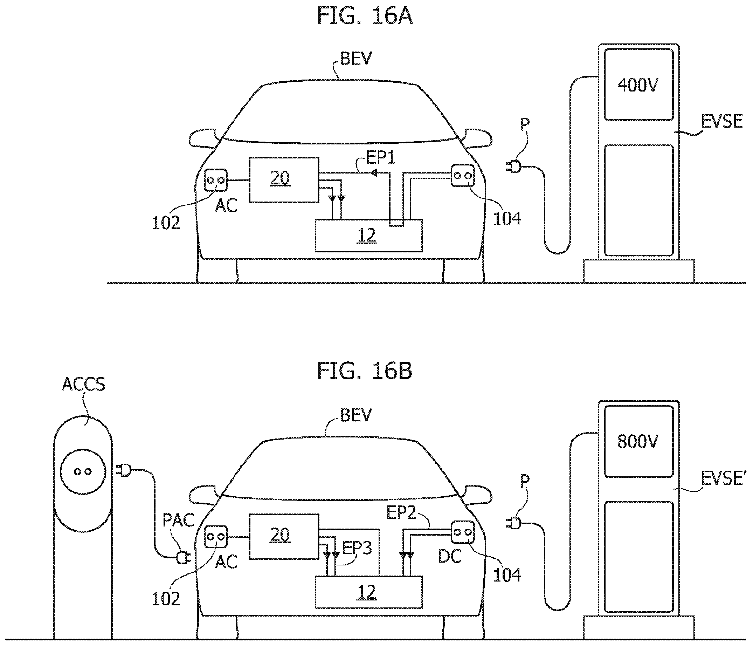

As exemplified in Figure 16A a BEV with an on-board battery equipped with electronic system 100 according to the present description can be coupled (via a socket provided by the EVSE and coupled to the port 102 or 104) to the EVSE, even in the case where the battery B has a voltage rating higher than the one for which the EVSE is designed.

As exemplified in Figure 16A, in the case where the supply by the EVSE is 400 V and is delivered to the DC port 104, the voltage follows the current path EP1 through the first and second charging units 12, 20 so as to reach the boost voltage of 800 V, as discussed previously.

As exemplified in Figure 16B, in the case where the EVSE is designed to supply a voltage of 800 V, coupling of the latter to the DC charging port 104 via the socket P enables the voltage to reach the battery B directly via the current path EP2.

As exemplified in Figure 16B, in the case where the charging station is an alternating-current charging station (ACCS) and is coupled to the AC charging port 102 via an AC socket PAC, the voltage follows the current path EP3 from the second charging unit 20 to the battery, as discussed previously.

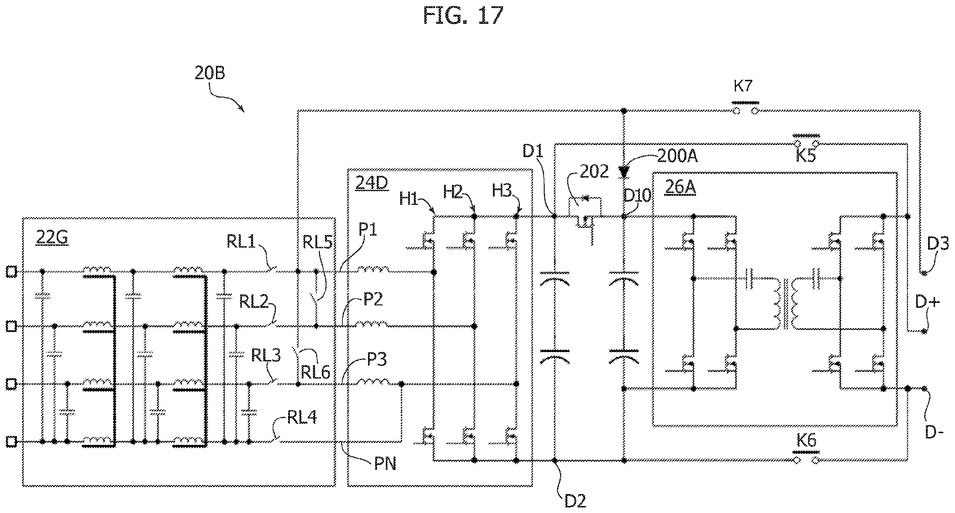

As exemplified in Figure 17, in a variant embodiment (e.g., an alternative way to reach a DC boost charging power of 50 kW using an 11-kW reference OBCM) a second charging circuit 20B comprises:
a third contactor K7 coupled between the node D3 of the EMI output filter 28 and the first input node P1 of a PFC circuitry 24D;
the first switching transistor 202 coupled between the nodes D1 and D10; and
a diode 200A coupled between the first input node P1 of the PFC circuitry 24D and the input node D10 of the DC-DC converter 26A.

For instance, in response to the voltage received at the DC port 104 having a second voltage level lower than said first voltage level, the control circuitry 18 is configured to:
switch ON the third contactor K7;
switch OFF the coupling switch 202; and
switch ON the first contactor K5 and the second contactor K6
so as to supply a regulated DC-DC voltage VD between the DC output nodes HV+, HV- of the second charging unit 20A coupled to the respective DC output nodes O+, O- of the first charging unit 12 as boosted voltage VR, VD.

For instance, the PFC circuitry 24D comprises input nodes P1, P2, P3, PN and output nodes D1, D2 and three half-bridge branches H1, H2, H3 configured to supply to the output nodes a regulated version of the input voltage, as discussed previously.

As exemplified in Figure 17, an EMI input filter 22G comprises:
a first switch RL1 set between the first input node L1 of the EMI input filter 22G and the first node P1 of the PFC circuitry 24D;
a second switch RL2 set between the second input node L2 of the EMI input filter 22G and the second node P2 of the PFC circuitry 24D;
a third switch RL3 set between the third input node L3 of the EMI input filter 22G and the third input node P3 of the PFC circuitry 24D;
a fourth switch RL4 set between the fourth input node N of the EMI input filter 22G and the fourth input node PN of the PFC circuitry 24D;
a fifth switch RL5 set between the first PFC node P1 and the second PFC node P2; and
a further switch RL6 set between the first input node P1 and the third input node P3 of the PFC circuitry 24D.

For instance, in response to coupling of the DC charging portion 104 of the charging port 10 to an EVSE that supplies a first voltage level lower than a second voltage level, using the second charging circuit 20B we have:
the control unit 18 is configured to drive the switches RL1, RL2, RL3, RL4 so that they are switched OFF (i.e., opened) and drive the switches RL5, RL6, as well as the contactors K5, K6 and K7, so that they are switched ON (i.e., closed); at the same time, the control unit 18 is configured to drive the first coupling switch 202 so that it is switched OFF (i.e., opened).

A system as exemplified herein comprises:
a charging port 10 comprising an AC port 102, configured to receive an AC supply voltage, and a DC port 104, configured to receive a DC supply voltage, the charging port 10 being configured to be coupled to an EVSE so as to receive the AC supply voltage or the DC supply voltage therefrom;
a first charging unit 12 comprising a positive DC input node DC+ and a negative DC input node DC- both coupled to the DC port 104 to receive the DC supply voltage therefrom, the first charging unit 12 further comprising:
   a positive DC output node O+, a negative DC output node O-, and a first booster node DB, as well as a battery B having a positive battery terminal B+ and a negative battery terminal B-, wherein the booster node DB is coupled to the positive DC input node DC+;
   a first switch K1 set between the positive battery terminal B+ and the positive DC output node;
   a second switch K2 set between the negative battery terminal B- and the negative DC output node;
   a third switch K3 set between the positive DC input node DC+ and the positive DC output node; and
   a fourth switch K4 set between the negative DC input node DC- and the negative DC output node;
a second charging unit 20A comprising AC input nodes L1, L2, L3, N coupled to the AC input port 102 and DC output nodes HV+, HV-coupled 14 to respective DC output nodes of the first charging unit, the second charging unit comprising:
   a second booster node HB coupled to the first booster node of the first charging unit;
   an electromagnetic-interference (EMI) filter 22 coupled to the AC input nodes of the second charging unit 20A and configured to carry out EMI filtering of a received supply voltage, supplying a filtered voltage as result;
   a power-factor-correction (PFC) circuitry 24 comprising PFC input nodes P1, P2, P3, PN coupled to the EMI filter 22 to receive the filtered voltage therefrom, the PFC circuitry 24 being configured to supply, on the basis of the filtered voltage, a rectified voltage VR across a first PFC output node D1 and a second PFC output node D2;
   a DC-DC converter circuit 26 coupled to the first D1 and second D2 PFC output nodes to receive the rectified voltage VR therefrom, the DC-DC converter circuit being configured to supply, on the basis of the rectified voltage VR, a regulated DC-DC voltage VD between the DC output nodes of the second charging unit that are coupled to the respective DC output nodes of the first charging unit;
   a first contactor K5 set between the first output node D1 of the PFC circuitry 24 and a first output node HV+ of the second charging unit 20A;
   a second contactor K6 set between a second output node D2 of the PFC circuitry and a second output node HV- of the second charging unit;
   a set of booster switches RL set between the second booster node HB, the AC input nodes of the second charging unit, and the PFC input nodes;
   a coupling circuitry 200, 200A set between the second booster node and an input node D10 of the DC-DC converter 26; and
   a coupling switch 202 set between the first PFC output node D1 and the input node D10 of the DC-DC converter 26,
the system further comprising control circuitry coupled to the first, second, third, and fourth switches of the first charging unit, as well as to the set of booster switches, to the first contactor and the second contactor, to the coupling circuitry. and to the coupling switch in the second charging unit, where the control circuitry is configured to:
   a) in response to the DC supply voltage received at the DC input port having a first voltage level,
      switch ON the first and second switches of the first charging unit, coupling the respective positive and negative DC output nodes to the respective positive and negative battery terminals;
      switch ON the third and fourth switches of the first charging unit, coupling the positive DC input node and the negative DC input node to the respective positive and negative DC output nodes;
      switch OFF at least one of the booster switches RL so as to decouple the second booster node from the input nodes of the PFC circuitry; and
      switch OFF the first contactor and the second contactor, decoupling the DC output nodes of the first charging unit from the PFC circuitry, and apply the DC supply voltage having the first voltage level across the positive terminal and the negative terminal of the battery as result; and
   b) in response to the voltage received at the DC port having a second voltage level lower than said first voltage level,
      switch ON the first and second switches of the first charging unit in order to couple the respective positive and negative DC output nodes to the respective positive and negative battery terminals;
      switch ON the fourth switch K4 of the first charging unit in order to couple the negative DC input node to the respective negative DC output node;
      switch OFF the third switch K3 of the first charging unit so as to decouple the positive DC input node from the positive DC output node, coupling the positive DC input node to the booster node as result; and
      switch ON at least one RL6 of the booster switches in order to couple the second booster node to the PFC circuitry.

As exemplified herein, said coupling circuitry comprises a further coupling switch 200, and wherein, in response to the voltage received at the DC port having a second voltage level lower than said first voltage level, the control circuitry is configured to:
switch OFF the further coupling switch 200;
switch OFF the coupling switch 202; and
switch ON the first contactor and the second contactor so as to apply as result a boosted voltage VR across the positive and negative terminals of the battery.

As exemplified herein, said coupling circuitry comprises a further coupling switch 200, and wherein, in response to the voltage received at the DC port 104 having a second voltage level lower than said first voltage level, the control circuitry 18 is configured to:
switch ON the further coupling switch 200;
switch OFF the coupling switch 202; and
switch ON the first contactor K5 and the second contactor K6,
so as to supply a regulated DC-DC voltage VD between the DC output nodes HV+, HV- of the second charging unit 20A coupled to the respective DC output nodes O+, O- of the first charging unit 12 as DC boosted voltage VR, VD supplied by the PFC circuitry 24 and by the DC-DC converter circuit 26.

As exemplified herein, the battery is configured to be charged to the first voltage level higher than the second voltage level.

For instance, said first voltage level is twice said second voltage level.

As exemplified herein, the DC-DC converter 26 comprises a unidirectional or bidirectional DC-DC converter 26A.

As exemplified herein, the set of booster switches RL is integrated in the EMI filter 22 and comprises:
a first set of booster switches RL1, RL2, RL3, RL4 set between the AC input nodes of the second charging unit and the PFC input nodes of the PFC circuitry; and
a second set of booster switches RL5, RL6, RL7 set between at least one PFC input node of the PFC circuitry 24 and the second booster node HB,
wherein the control circuitry is configured to drive the first set of booster switches and the second set of booster switches so as to:
   i) in response to the DC supply voltage received at the DC input port having said second voltage level lower than said first voltage level,
      switch OFF the first set of switches so as to decouple the AC input nodes of the second charging unit from the input nodes of the PFC circuitry; and
      switch ON the second set of booster switches in order to couple the second booster node to at least one PFC input node of the PFC circuitry; and
   ii) in response to receiving the AC supply voltage at the AC port:
      switch ON the first set of switches in order to couple the AC input nodes of the second charging unit to the PFC input nodes of the PFC circuitry; and
      switch OFF the second set of booster switches so as to decouple the second booster node of the second charging unit from the at least one PFC input node of the PFC circuitry.

As exemplified herein, the system comprises a further electromagnetic-interference (EMI) filter 28 set between the first output node, the second output node, and the second booster node of the second charging unit and the DC-DC converter, the further EMI filter being configured to carry out EMI filtering of a received supply voltage, supplying a filtered voltage as result.

As exemplified herein, the PFC circuitry 24 comprises a set of half-bridge devices, comprising switching nodes coupled to the input nodes of the PFC circuitry, the half-bridge devices being configured to supply the rectified voltage across the first PFC output node and the second PFC output node;
the half-bridge devices comprising at least one switching transistor, which is configured to couple an input node of the PFC circuitry to the switching nodes of the half-bridge devices of the set of half-bridge devices.

As exemplified herein, the system comprises a third contactor K7 coupled between a first input node of the PFC circuitry and the first output node HV+ of the second charging unit 20B, wherein said coupling circuitry comprises a coupling diode 200A coupled to said third contactor, and wherein, in response to the voltage received at the DC port having a second voltage level lower than said first voltage level, the control circuitry is configured to:
switch ON the third contactor K7;
switch OFF the coupling switch 202; and
switch ON the first contactor and the second contactor
so as to supply a regulated DC voltage between the DC output nodes of the second charging unit coupled to the respective DC output nodes of the first charging unit as DC boosted voltage.

A battery electric vehicle (BEV) may be equipped with a system 100 as exemplified herein.

Without prejudice to the underlying principles, the details and embodiments may vary, even appreciably, with respect to what has been described herein, purely by way of example, without thereby departing from the sphere of protection and the scope of the present invention, as this is defined in the annexed claims.

## Claims

1. A system (100), comprising:
a charging port (10) comprising an AC port (102) configured to receive an AC supply voltage and a DC port (104) configured to receive a DC supply voltage, the charging port (10) configured to be coupled to a charging station (EVSE) so as to receive the AC supply voltage or the DC supply voltage therefrom,
a first charging unit (12) comprising a positive DC input node (DC+) and a negative DC input node (DC-) both coupled to the DC port (104) to receive the DC supply voltage therefrom, the first charging unit (12) further comprising:
a positive DC output node (O+), a negative DC output node (O-) and a first booster node (DB) as well as a battery (B) having a positive battery terminal (B+) and a negative battery terminal (B-), wherein the booster node (DB) is coupled to the positive DC input port (D+);
a first switch (K1) interposed the positive battery terminal (B+) and the positive DC output node (O+);
a second switch (K2) interposed the negative battery terminal (B-) and the negative DC output node (O-);
a third switch (K3) interposed the positive DC input node (DC+) and the positive DC output node (O+); and
a fourth switch (K4) interposed the negative DC input node (DC+) interposed the negative DC input node (DC-) and the negative DC output node (O-);
a second charging unit (20A) comprising AC input nodes (L1, L2, L3, N) coupled to the AC input node (102) and DC output nodes (HV+, HV-) coupled (14) to respective output DC nodes (O+, O-) of the first charging unit (12), the second charging unit (20A) comprising:
a second booster node (HB) coupled (14) to the first booster node (DB) of the first charging unit (12);
an electromagnetic interference, EMI filter (22) coupled to the AC input nodes (L1, L2, L3, N) of the second charging unit (20A) and configured to perform an EMI filtering of a received supply voltage, providing a filtered voltage as a result;
power factor correction circuitry, PFC (24) comprising PFC input nodes (P1, P2, P3, PN) coupled to the EMI filter (22) to receive the filtered voltage therefrom, the PFC circuitry (24) configured to provide, based on the filtered voltage, a rectified voltage (VR) to ends of a first PFC output node (D1) and a second PFC output node (D2);
a DC-DC converter circuit (26) coupled to the first (D1) and to the second (D2) PFC output node to receive the rectified voltage (VR) therefrom, the DC-DC converter circuit (26) configured to provide, based on the rectified tension (VR), a regulated DC-DC voltage (VD) among DC output nodes (HV+, HV-) of the second charging unit (20A) coupled to respective DC output nodes (O+, O-) of the first charging unit (12);
a first contactor (K5) interposed the first output node (D1) of the PFC circuitry (24) and a first output node (HV+) of the second charging unit (20A);
a second contactor (K6) interposed a second output node (D2) of the PFC circuitry (24) and a second output node (HV-) of the second charging unit (20A);
a set of booster switches (RL) interposed the second booster node (HB), the AC input nodes (L1, L2, L3, N) of the second charging unit (20A) and the PFC input nodes (P1, P2, P3, PN);
coupling circuitry (200; 200A) interposed the second booster node (HB) and an input node (D10) of the DC-DC converter circuit (26);
a coupling switch (202) interposed the first PFC output node (D1) and the input node (D10) of the DC-DC converter circuit (26), and
the system further comprises control circuitry coupled to the first (K1), to the second (K2), to the third (K3) and to the fourth (K4) switch of the first charging unit (12) as well as to the set of booster switches (RL), the first contactor (K5) and the second contactor (K6), to the coupling circuitry (200; 200A) and to the coupling switch (202) in the second charging unit (20A), wherein the control circuitry (18) is configured to:
a) in response to the DC supply voltage received at the DC input port (104) having a first voltage level:
switching ON the first switch (K1) and the second switch (K2) of the first charging unit (12), coupling respective positive (O+) and negative (O-) DC output nodes to the respective positive (B+) and negative (B-) battery terminals,
switching ON the third switch (K3) and the fourth switch (K4) of the first charging unit (12), coupling the positive DC input node (DC+) and the negative DC input node (DC-) to respective positive (O+) and negative (O-) DC output nodes,
switching OFF at least one (RL6) of the booster switches (RL) so as to decouple the second booster node (HB) from input nodes of the PFC circuitry (24);
switching OFF the first contactor (K5) and the second contactor (K6), decoupling the DC output nodes (O+, O-) of the first charging unit (12) of the PFC circuitry (24) and applying DC supply voltage having a first voltage level at ends of the positive terminal (B+) and of the negative terminal (B-) of the battery (B) as a result, and
b) in response to the DC voltage received at the DC port (104) having a second voltage level lower than said first voltage level:
switching ON the first switch (K1) and the second switch (K2) of the first charging unit (12), so as to coupled respective positive (O+) and negative (O-) DC output nodes to respective positive (B+) and negative (B-) battery terminals,
switching ON the fourth switch (K4) of the first charging unit (12), so as to couple the negative DC input node (DC-) to the respective negative DC output node (O-),
switching OFF the third switch (K3) of the first charging unit (12) so as to decouple the positive DC input node (DC+) from the positive DC output node (O+), coupling the positive DC input node (DC+) to the booster node (DB) as a result,
switching ON at least one (RL6) of the booster switches (RL) so as to couple the second booster node (DB, HB) to the PFC circuitry (24).

2. The system (100) of claim 1, wherein said coupling circuitry (200; 200A) comprises a further coupling switch (200), and wherein, in response to the voltage receive at the DC port (104) having a second voltage level lower than said first voltage level, the control circuitry (18) is configured to:
switching OFF the further coupling switch (200),
switching OFF the coupling switch (202),
switching ON the first contactor (K5) and the second contactor (K6) so as to apply a boosted voltage as a result (VR) to the ends of the positive terminal (B+) and of the negative terminal (B-) of the battery (B).

3. The system (100) of claim 1, wherein said coupling circuitry (200; 200A) comprises a further coupling switch (200) and wherein, in response to the voltage received at the DC port (104) having a second voltage level lower than said first voltage level, the control circuitry (18) is configured to:
switching ON the further coupling switch (200),
switching OFF the coupling switch (202),
switching ON the first contactor (K5) and the second contactor (K6),
so as to provide a DC-dc regulated voltage (VD) among output DC nodes (HV+, HV-) of the second charging unit (20A) coupled to respective output DC nodes (O+, O-) of the first charging unit (12) as DC boosted voltage (VR, VD) provided by the PFC circuitry (24) and by the DC-DC converter circuit (26).

4. The system (100) according to any of the previous claims, wherein the battery (B) is configured to be charged at the first voltage level higher than the second voltage level, preferably wherein said first voltage level is twice the second voltage level.

5. The system (100) according to any of the previous claims, wherein the DC-DC converter circuit (26) comprises a unidirectional or a bidirectional DC-DC converter circuit (26A).

6. The system (100) of any of the previous claims, wherein the set of booster switches (RL) is integrated in the EMI filter (22),
wherein the set of booster switches (RL) integrated in the EMI filter (22) comprises:
a first set of booster switches (RL1, RL2, RL3, RL4) interposed the AC input nodes (L1, L2, L3, N) of the second charging unit (20A) and the PFC input nodes (P1, P2, P3, PN) of the PFC circuitry (24), and
a second set of booster switches (RL5, RL6, RL7) interposed at least one PFC input node (P1, P2, P3, PN) of the PFC circuitry (24) and the second booster node (HB),
wherein the control circuitry (18) is configured to drive the first set of booster switches (RL1, RL2, RL3, RL4) and the second set of booster switches (RL6, RL6, RL7):
i) in response to the DC supply voltage received at the DC input port (104) having said second voltage level lower than said first voltage level:
switching OFF the first set of switches (RL1, RL2, RL3, RL4), so as to decouple the AC input nodes (L1, L2, L3, N) of the second charging unit (20A) from the input nodes (P1, P2, P3, PN) of the PFC circuitry (24), and
switching ON the second set of booster switches (RL5, RL6, RL7), so as to couple the second booster node to at least one PFC input node (P1, P2, P3, PN) of the PFC circuitry (24);
ii) in response to receiving the AC supply voltage to the AC port (102):
switching ON the first set of switches (RL1, RL2, RL3, RL4), so as to couple AC input nodes (L1, L2, L3, N) of the second charging unit (20A) from PFC input nodes (P1, P2, P3, PN) of the PFC circuitry (24), and
switching OFF the second set of booster switches (RL5, RL6, RL7), so as to decouple the second booster node (HB) of the second charging unit (20A) from the at least one PFC input node (P1, P2, P3, PN) of the PFC circuitry (24).

7. The system (100) according to any of the previous claims, comprising a further electromagnetic interference, EMI filter (28) interposed the first output node (HV+), the second output node (HV-) and the second booster node (HB) of the second charging unit (20A) and the DC-DC converter (26), the further EMI filter (28) configured to perform an EMI filtering of a received supply voltage, providing a filtered voltage as a result.

8. The system (100) according to any of the previous claims, wherein the PFC circuitry (24) comprises a set of half-bridge devices (H1, H2, H3, H4, HN) comprising switching nodes coupled to input nodes (P1, P2, P3, PN) of the PFC circuitry (24), the half-bridge devices in the set of half-bridge devices (H1, H2, H3, H4, HN) configured to provide the rectified voltage (VR) at ends of the first PFC output node (D1) and of the second PFC output node (D2);
the half-bridge devices comprising at least one switching transistor (Q3, Q4, Q5, Q6) configured to couple an input node (PN) of the PFC circuitry (24) to the switching nodes of the half-bridge devices in the set of half-bridge devices (H1, H2, H3, H4, HN).

9. The system (100) according to claim 1, comprising a third contactor (K7) coupled among a first input node (P1) of the PFC circuitry (24D) and the first output node (HV+) of the second charging unit (20A; 20B), wherein said coupling circuitry (200; 200A) comprises a coupling diode (200A) coupled to said third contactor, and wherein, in response to the voltage received at the DC port (104) having a second voltage level lower than said first voltage level, the control circuitry (18) is configured to:
switching ON the third contactor (K7),
switching OFF the coupling switch (202),
switching ON the first contactor (K5) and the second contactor (K6),
so as to provide a DC regulated voltage (VD) among DC output nodes (HV+, HV-) of the second charging unit (20B) coupled to respective DC output nodes (O+, O-) of the first charging unit (12) as a DC boosted voltage (VR, VD) provided by the PFC circuitry (24D) and by the DC-DC converter circuit (26A).

10. A battery-powered electric vehicle (BEV) equipped with a system (100) according to any of the previous claims.

## Patentansprüche

1. System (100), umfassend:
einen Ladeanschluss (10), umfassend einen Wechselstromanschluss (102), der zum Empfangen einer Versorgungswechselspannung eingerichtet ist, und einen Gleichstromanschluss (104), der zum Empfangen einer Versorgungsgleichspannung eingerichtet ist, wobei der Ladeanschluss (10) dazu eingerichtet ist, mit einer Ladestation (EVSE) verbunden zu werden, um die Versorgungswechselspannung oder die Versorgungsgleichspannung von ihr zu empfangen,
eine erste Ladeeinheit (12), die einen positiven Gleichstrom-Eingangsknoten (DC+) und einen negativen Gleichstrom-Eingangsknoten (DC-) umfasst, die beide mit dem Gleichstromanschluss (104) verbunden sind, um die Versorgungsgleichspannung von ihm zu empfangen, wobei die erste Ladeeinheit (12) ferner umfasst:
einen positiven Gleichstrom-Ausgangsknoten (O+), einen negativen Gleichstrom-Ausgangsknoten (O-) und einen ersten Spannungsverstärkerknoten (DB) sowie eine Batterie (B) mit einer positiven Batterieklemme (B+) und einer negativen Batterieklemme (B-), wobei der Spannungsverstärkerknoten (DB) mit dem positiven Gleichstrom-Eingangsanschluss (D+) verbunden ist;
einen ersten Schalter (K1), der zwischen die positive Batterieklemme (B+) und den positiven Gleichstrom-Ausgangsknoten (O+) geschaltet ist;
einen zweiten Schalter (K2), der zwischen die negative Batterieklemme (B-) und den negativen Gleichstrom-Ausgangsknoten (O-) geschaltet ist;
einen dritten Schalter (K3), der zwischen den positiven Gleichstrom-Eingangsknoten (DC+) und den positiven Gleichstrom-Ausgangsknoten (O+) geschaltet ist; und
einen vierten Schalter (K4), der zwischen den negativen Gleichstrom-Eingangsknoten (DC-) und den negativen Gleichstrom-Ausgangsknoten (O-) geschaltet ist;
eine zweite Ladeeinheit (20A), umfassend Wechselstrom-Eingangsknoten (L1, L2, L3, N), die mit dem Wechselstrom-Eingangsknoten (102) verbunden sind, und Gleichstrom-Ausgangsknoten (HV+, HV-), die mit jeweiligen Gleichstrom-Ausgangsknoten (O+, O-) der ersten Ladeeinheit (12) verbunden sind (14), wobei die zweite Ladeeinheit (20A) umfasst:
einen zweiten Spannungsverstärkerknoten (HB), der mit dem ersten Spannungsverstärkerknoten (DB) der ersten Ladeeinheit (12) verbunden ist (14);
ein EMI-Filter gegen elektromagnetische Störungen (22), das mit den Wechselstrom-Eingangsknoten (L1, L2, L3, N) der zweiten Ladeeinheit (20A) verbunden und dazu eingerichtet ist, eine EMI-Filterung einer empfangenen Versorgungsspannung vorzunehmen und infolgedessen eine gefilterte Spannung bereitzustellen;
eine PFC-Schaltung zur Leistungsfaktorkorrektur (24), umfassend PFC-Eingangsknoten (P1, P2, P3, PN), die mit dem EMI-Filter (22) verbunden sind, um die gefilterte Spannung von ihm zu empfangen, wobei die PFC-Schaltung (24) dazu eingerichtet ist, auf der Grundlage der gefilterten Spannung eine gleichgerichtete Spannung (VR) an die Enden eines ersten PFC-Ausgangsknotens (D1) und eines zweiten PFC-Ausgangsknotens (D2) zu liefern;
eine Gleichspannungswandlerschaltung (26), die mit dem ersten (D1) und dem zweiten (D2) PFC-Ausgangsknoten verbunden ist, um die gleichgerichtete Spannung (VR) von ihnen zu empfangen, wobei die Gleichspannungswandlerschaltung (26) dazu eingerichtet ist, auf der Grundlage der gleichgerichteten Spannung (VR) eine DC/DC-geregelte Spannung (VD) bei Gleichstrom-Ausgangsknoten (HV+, HV-) der zweiten Ladeeinheit (20A) bereitzustellen, die mit entsprechenden Gleichstrom-Ausgangsknoten (O+, O-) der ersten Ladeeinheit (12) verbunden sind;
ein erstes Schütz (K5), das zwischen den ersten Ausgangsknoten (D1) der PFC-Schaltung (24) und einen ersten Ausgangsknoten (HV+) der zweiten Ladeeinheit (20A) geschaltet ist;
ein zweites Schütz (K6), das zwischen einen zweiten Ausgangsknoten (D2) der PFC-Schaltung (24) und einen zweiten Ausgangsknoten (HV-) der zweiten Ladeeinheit (20A) geschaltet ist;
eine Reihe von Spannungsverstärkerschaltern (RL), die zwischen den zweiten Spannungsverstärkerknoten (HB), die Wechselstrom-Eingangsknoten (L1, L2, L3, N) der zweiten Ladeeinheit (20A) und die PFC-Eingangsknoten (P1, P2, P3, PN) geschaltet sind;
eine Kopplungsschaltung (200; 200A), die zwischen den zweiten Spannungsverstärkerknoten (HB) und einen Eingangsknoten (D10) der Gleichspannungswandlerschaltung (26) geschaltet ist;
einen Kopplungsschalter (202), der zwischen den ersten PFC-Ausgangsknoten (D1) und den Eingangsknoten (D10) der Gleichspannungswandlerschaltung (26) geschaltet ist, und
wobei das System ferner eine Steuerschaltung umfasst, die mit dem ersten (K1), dem zweiten (K2), dem dritten (K3) und dem vierten (K4) Schalter der ersten Ladeeinheit (12) sowie mit der Reihe von Spannungsverstärkerschaltern (RL), dem ersten Schütz (K5) und dem zweiten Schütz (K6), der Kopplungsschaltung (200; 200A) und dem Kopplungsschalter (202) in der zweiten Ladeeinheit (20A) verbunden ist, wobei die Steuerschaltung (18) zu Folgendem eingerichtet ist,
a) als Reaktion auf die am Gleichstrom-Eingangsanschluss (104) empfangene Versorgungsgleichspannung, die einen ersten Spannungspegel aufweist:
Einschalten des ersten Schalters (K1) und des zweiten Schalters (K2) der ersten Ladeeinheit (12), wobei die jeweiligen positiven (O+) und negativen (O-) Gleichstrom-Ausgangsknoten mit den jeweiligen positiven (B+) und negativen (B-) Batterieklemmen verbunden werden,
Einschalten des dritten Schalters (K3) und des vierten Schalters (K4) der ersten Ladeeinheit (12), wobei der positive Gleichstrom-Eingangsknoten (DC+) und der negative Gleichstrom-Eingangsknoten (DC-) mit jeweiligen positiven (O+) und negativen (O-) Gleichstrom-Ausgangsknoten verbunden werden,
Ausschalten von mindestens einem (RL6) der Spannungsverstärkerschalter (RL), um den zweiten Spannungsverstärkerknoten (HB) von Eingangsknoten der PFC-Schaltung (24) zu trennen;
Ausschalten des ersten Schützes (K5) und des zweiten Schützes (K6), wobei die Gleichstrom-Ausgangsknoten (O+, O-) der ersten Ladeeinheit (12) von der PFC-Schaltung (24) getrennt werden und infolgedessen eine Versorgungsgleichspannung mit einem ersten Spannungspegel an Enden der positiven Klemme (B+) und der negativen Klemme (B-) der Batterie (B) angelegt wird, und
b) als Reaktion auf die am Gleichstromanschluss (104) empfangene Gleichspannung, die einen zweiten Spannungspegel aufweist, der niedriger als der erste Spannungspegel ist:
Einschalten des ersten Schalters (K1) und des zweiten Schalters (K2) der ersten Ladeeinheit (12), um jeweilige positive (O+) und negative (O-) Gleichstrom-Ausgangsknoten mit jeweiligen positiven (B+) und negativen (B-) Batterieklemmen zu verbinden,
Einschalten des vierten Schalters (K4) der ersten Ladeeinheit (12), um den negativen Gleichstrom-Eingangsknoten (DC-) mit dem jeweiligen negativen Gleichstrom-Ausgangsknoten (O-) zu verbinden,
Ausschalten des dritten Schalters (K3) der ersten Ladeeinheit (12), um den positiven Gleichstrom-Eingangsknoten (DC+) von dem positiven Gleichstrom-Ausgangsknoten (O+) zu trennen, wobei infolgedessen der positive Gleichstrom-Eingangsknoten (DC+) mit dem Spannungsverstärkerknoten (DB) verbunden wird,
Einschalten von mindestens einem (RL6) der Spannungsverstärkerschalter (RL), um den zweiten Spannungsverstärkerknoten (DB, HB) mit der PFC-Schaltung (24) zu verbinden.

2. System (100) nach Anspruch 1, wobei die Kopplungsschaltung (200; 200A) einen weiteren Kopplungsschalter (200) umfasst und wobei die Steuerschaltung (18) zu Folgendem als Reaktion auf die am Gleichstromanschluss (104) empfangene Spannung, die einen zweiten Spannungspegel aufweist, der niedriger als der erste Spannungspegel ist, eingerichtet ist:
Ausschalten des weiteren Kopplungsschalters (200),
Ausschalten des Kopplungsschalters (202),
Einschalten des ersten Schützes (K5) und des zweiten Schützes (K6), um infolgedessen eine erhöhte Spannung (VR) an die Enden der positiven Klemme (B+) und der negativen Klemme (B-) der Batterie (B) anzulegen.

3. System (100) nach Anspruch 1, wobei die Kopplungsschaltung (200; 200A) einen weiteren Kopplungsschalter (200) umfasst und wobei die Steuerschaltung (18) zu Folgendem als Reaktion auf die am Gleichstromanschluss (104) empfangene Spannung, die einen zweiten Spannungspegel aufweist, der niedriger als der erste Spannungspegel ist, eingerichtet ist:
Einschalten des weiteren Kopplungsschalters (200),
Ausschalten des Kopplungsschalters (202),
Einschalten des ersten Schützes (K5) und des zweiten Schützes (K6),
um eine DC/DC-geregelte Spannung (VD) bei Gleichstrom-Ausgangsknoten (HV+, HV-) der zweiten Ladeeinheit (20A), die mit jeweiligen Gleichstrom-Ausgangsknoten (O+, O-) der ersten Ladeeinheit (12) verbunden sind, als erhöhte Gleichspannung (VR, VD) bereitzustellen, die von der PFC-Schaltung (24) und der Gleichspannungswandlerschaltung (26) bereitgestellt wird.

4. System (100) nach einem der vorhergehenden Ansprüche, wobei die Batterie (B) dazu eingerichtet ist, mit dem ersten Spannungspegel geladen zu werden, der höher als der zweite Spannungspegel ist, vorzugsweise wobei der erste Spannungspegel das Zweifache des zweiten Spannungspegels beträgt.

5. System (100) nach einem der vorhergehenden Ansprüche, wobei die Gleichspannungswandlerschaltung (26) eine unidirektionale oder eine bidirektionale Gleichspannungswandlerschaltung (26A) umfasst.

6. System (100) nach einem der vorhergehenden Ansprüche, wobei die Reihe von Spannungsverstärkerschaltern (RL) in das EMI-Filter (22) integriert ist,
wobei die in das EMI-Filter (22) integrierte Reihe von Spannungsverstärkerschaltern (RL) umfasst:
eine erste Reihe von Spannungsverstärkerschaltern (RL1, RL2, RL3, RL4), die zwischen die Wechselstrom-Eingangsknoten (L1, L2, L3, N) der zweiten Ladeeinheit (20A) und die PFC-Eingangsknoten (P1, P2, P3, PN) der PFC-Schaltung (24) geschaltet sind, und
eine zweite Reihe von Spannungsverstärkerschaltern (RL5, RL6, RL7), die zwischen mindestens einen PFC-Eingangsknoten (P1, P2, P3, PN) der PFC-Schaltung (24) und den zweiten Spannungsverstärkerknoten (HB) geschaltet sind,
wobei die Steuerschaltung (18) dazu eingerichtet ist, die erste Reihe von Spannungsverstärkerschaltern (RL1, RL2, RL3, RL4) und die zweite Reihe von Spannungsverstärkerschaltern (RL6, RL6, RL7) anzusteuern:
i) als Reaktion auf die am Gleichstrom-Eingangsanschluss (104) empfangene Versorgungsgleichspannung, die den zweiten Spannungspegel aufweist, der niedriger als der erste Spannungspegel ist:
Ausschalten der ersten Reihe von Schaltern (RL1, RL2, RL3, RL4), um die Wechselstrom-Eingangsknoten (L1, L2, L3, N) der zweiten Ladeeinheit (20A) von den Eingangsknoten (P1, P2, P3, PN) der PFC-Schaltung (24) zu trennen, und
Einschalten der zweiten Reihe von Spannungsverstärkerschaltern (RL5, RL6, RL7), um den zweiten Spannungsverstärkerknoten mit mindestens einem PFC-Eingangsknoten (P1, P2, P3, PN) der PFC-Schaltung (24) zu verbinden;
ii) als Reaktion auf das Empfangen der Versorgungswechselspannung am Wechselstromanschluss (102):
Einschalten der ersten Reihe von Schaltern (RL1, RL2, RL3, RL4), um Wechselstrom-Eingangsknoten (L1, L2, L3, N) der zweiten Ladeeinheit (20A) mit PFC-Eingangsknoten (P1, P2, P3, PN) der PFC-Schaltung (24) zu verbinden, und
Ausschalten der zweiten Reihe von Spannungsverstärkerschaltern (RL5, RL6, RL7), um den zweiten Spannungsverstärkerknoten (HB) der zweiten Ladeeinheit (20A) von dem mindestens einen PFC-Eingangsknoten (P1, P2, P3, PN) der PFC-Schaltung (24) zu trennen.

7. System (100) nach einem der vorhergehenden Ansprüche, umfassend ein weiteres EMI-Filter gegen elektromagnetische Störungen (28), das zwischen den ersten Ausgangsknoten (HV+), den zweiten Ausgangsknoten (HV-) und den zweiten Spannungsverstärkerknoten (HB) der zweiten Ladeeinheit (20A) und den Gleichspannungswandler (26) geschaltet ist, wobei das weitere EMI-Filter (28) dazu eingerichtet ist, eine EMI-Filterung einer empfangenen Versorgungsspannung vorzunehmen und infolgedessen eine gefilterte Spannung bereitzustellen.

8. System (100) nach einem der vorhergehenden Ansprüche, wobei die PFC-Schaltung (24) eine Reihe von Halbbrückenvorrichtungen (H1, H2, H3, H4, HN) umfasst, die Schaltknoten umfassen, die mit Eingangsknoten (P1, P2, P3, PN) der PFC-Schaltung (24) verbunden sind, wobei die Halbbrückenvorrichtungen in der Reihe von Halbbrückenvorrichtungen (H1, H2, H3, H4, HN) dazu eingerichtet sind, die gleichgerichtete Spannung (VR) an Enden des ersten PFC-Ausgangsknotens (D1) und des zweiten PFC-Ausgangsknotens (D2) bereitzustellen;
wobei die Halbbrückenvorrichtungen mindestens einen Schalttransistor (Q3, Q4, Q5, Q6) umfassen, der dazu eingerichtet ist, einen Eingangsknoten (PN) der PFC-Schaltung (24) mit den Schaltknoten der Halbbrückenvorrichtungen in der Reihe von Halbbrückenvorrichtungen (H1, H2, H3, H4, HN) zu verbinden.

9. System (100) nach Anspruch 1, umfassend ein drittes Schütz (K7), das zwischen einem ersten Eingangsknoten (P1) der PFC-Schaltung (24D) und dem ersten Ausgangsknoten (HV+) der zweiten Ladeeinheit (20A; 20B) verbunden ist, wobei die Kopplungsschaltung (200; 200A) eine Koppeldiode (200A) umfasst, die mit dem dritten Schütz verbunden ist, und wobei die Steuerschaltung (18) zu Folgendem als Reaktion auf die am Gleichstromanschluss (104) empfangene Spannung, die einen zweiten Spannungspegel aufweist, der niedriger als der erste Spannungspegel ist, eingerichtet ist:
Einschalten des dritten Schützes (K7),
Ausschalten des Kopplungsschalters (202),
Einschalten des ersten Schützes (K5) und des zweiten Schützes (K6),
um eine geregelte Gleichspannung (VD) bei Gleichstrom-Ausgangsknoten (HV+, HV-) der zweiten Ladeeinheit (20B), die mit jeweiligen Gleichstrom-Ausgangsknoten (O+, O-) der ersten Ladeeinheit (12) verbunden sind, als erhöhte Gleichspannung (VR, VD) bereitzustellen, die von der PFC-Schaltung (24D) und der Gleichspannungswandlerschaltung (26A) bereitgestellt wird.

10. Batterieelektrisches Fahrzeug (BEV), das mit einem System (100) nach einem der vorhergehenden Ansprüche ausgestattet ist.

## Revendications

1. Système (100) comprenant :
un port de charge (10) comprenant un port CA (102) configuré pour recevoir une tension d'alimentation CA et un port CC (104) configuré pour recevoir une tension d'alimentation CC, le port de charge (10) étant configuré pour être couplé à une station de charge (EVSE) afin de recevoir de celle-ci la tension d'alimentation CA ou la tension d'alimentation CC,
une première unité de charge (12) comprenant un nœud d'entrée CC positif (DC+) et un nœud d'entrée CC négatif (DC-) tous deux couplés au port CC (104) pour recevoir de celui-ci la tension d'alimentation CC, la première unité de charge (12) comprenant en outre :
un nœud de sortie CC positif (O+), un nœud de sortie CC négatif (O-) et un premier nœud survolteur (DB) ainsi qu'une batterie (B) ayant une borne positive (B+) et une borne négative (B-), dans lequel le nœud survolteur (DB) est couplé au port d'entrée CC positif (D+) ;
un premier commutateur (K1) interposé entre la borne de batterie positive (B+) et le nœud de sortie CC positif (O+) ;
un deuxième commutateur (K2) interposé entre la borne de batterie négative (B-) et le nœud de sortie CC négatif (O-) ;
un troisième commutateur (K3) interposé entre le nœud d'entrée CC positif (DC+) et le nœud de sortie CC positif (O+) ; et
un quatrième commutateur (K4) interposé entre le nœud d'entrée CC négatif (DC-) et le nœud de sortie CC négatif (O-) ;
une seconde unité de charge (20A) comprenant des nœuds d'entrée CA (L1, L2, L3, N) couplés au nœud d'entrée CA (102) et des nœuds de sortie CC (HV+, HV-) couplés (14) aux nœuds de sortie CC respectifs (O+, O-) de la première unité de charge (12), la seconde unité de charge (20A) comprenant :
un second nœud survolteur (HB) couplé (14) au premier nœud survolteur (DB) de la première unité de charge (12) ;
un filtre d'interférences électromagnétiques, EMI (22) couplé aux nœuds d'entrée CA (L1, L2, L3, N) de la seconde unité de charge (20A) et configuré pour effectuer un filtrage EMI d'une tension d'alimentation reçue, fournissant une tension filtrée comme résultat ;
un ensemble de circuits de correction de facteur de puissance, PFC (24), comprenant des nœuds d'entrée PFC (P1, P2, P3, PN) couplés au filtre EMI (22) pour recevoir de celui-ci la tension filtrée, l'ensemble de circuits PFC (24) étant configuré pour fournir, sur la base de la tension filtrée, une tension redressée (VR) aux extrémités d'un premier nœud de sortie PFC (D1) et d'un second nœud de sortie PFC (D2) ;
un circuit convertisseur CC-CC (26) couplé au premier (D1) et au second (D2) nœuds de sortie PFC pour recevoir de ceux-ci la tension redressée (VR), le circuit convertisseur CC-CC (26) étant configuré pour fournir, sur la base de la tension redressée (VR), une tension CC-CC régulée (VD) entre les nœuds de sortie CC (HV+, HV-) de la seconde unité de charge (20A) couplés aux nœuds de sortie CC respectifs (O+, O-) de la première unité de charge (12) ;
un premier contacteur (K5) interposé entre le premier nœud de sortie (D1) de l'ensemble de circuits circuit PFC (24) et un premier nœud de sortie (HV+) de la seconde unité de charge (20A) ;
un deuxième contacteur (K6) interposé entre un second nœud de sortie (D2) de l'ensemble de circuits PFC (24) et un second nœud de sortie (HV-) de la seconde unité de charge (20A) ;
un ensemble de commutateurs survolteurs (RL) interposés entre le second nœud survolteur (HB), les nœuds d'entrée CA (L1, L2, L3, N) de la seconde unité de charge (20A) et les nœuds d'entrée PFC (P1, P2, P3, PN) ;
un ensemble de circuits de couplage (200 ; 200A) interposé entre le second nœud survolteur (HB) et un nœud d'entrée (D10) du circuit convertisseur CC-CC (26) ;
un commutateur de couplage (202) interposé entre le premier nœud de sortie PFC (D1) et le nœud d'entrée (D10) du circuit convertisseur CC-CC (26), et
le système comprend en outre un ensemble de circuits de commande couplé au premier (K1), au deuxième (K2), au troisième (K3) et au quatrième (K4) commutateurs de la première unité de charge (12) ainsi qu'à l'ensemble de commutateur survolteurs (RL), au premier contacteur (K5) et au deuxième contacteur (K6), à l'ensemble de circuits de couplage (200 ; 200A) et au commutateur de couplage (202) dans la seconde unité de charge (20A), dans lequel l'ensemble de circuits de commande (18) est configuré pour :
a) en réponse à la tension d'alimentation CC reçue au niveau du port d'entrée CC (104) ayant un premier niveau de tension :
activer le premier commutateur (K1) et le deuxième commutateur (K2) de la première unité de charge (12), coupler les nœuds de sortie CC positif (O+) et négatif (O-) respectifs aux bornes de batterie positive (B+) et négative (B-) respectives,
activer le troisième commutateur (K3) et le quatrième commutateur (K4) de la première unité de charge (12), coupler le nœud d'entrée CC positif (DC+) et le nœud d'entrée CC négatif (DC-) aux nœuds de sortie CC positif (O+) et négatif (O-) respectifs,
désactiver au moins un (RL6) des commutateurs survolteurs (RL) afin de découpler le second nœud survolteur (HB) des nœuds d'entrée de l'ensemble de circuits PFC (24) ;
désactiver le premier contacteur (K5) et le deuxième contacteur (K6), découpler les nœuds de sortie CC (O+, O-) de la première unité de charge (12) du l'ensemble de circuits PFC (24) et appliquer une tension d'alimentation CC ayant un premier niveau de tension aux extrémités de la borne positive (B+) et de la borne négative (B-) de la batterie (B) en conséquence, et
b) en réponse à la tension CC reçue au niveau du port CC (104) ayant un second niveau de tension inférieur audit premier niveau de tension :
activer le premier commutateur (K1) et le deuxième commutateur (K2) de la première unité de charge (12), de manière à coupler les nœuds de sortie CC positif (O+) et négatif (O-) respectifs aux bornes de batterie positive (B+) et négative (B-) respectives,
activer le quatrième commutateur (K4) de la première unité de charge (12), de manière à coupler le nœud d'entrée CC négatif (DC-) au nœud de sortie CC négatif respectif (O-),
désactiver le troisième commutateur (K3) de la première unité de charge (12) de manière à découpler le nœud d'entrée CC positif (DC+) du nœud de sortie CC positif (O+), ce qui a pour effet de coupler le nœud d'entrée CC positif (DC+) au nœud survolteur (DB),
activer au moins un (RL6) des commutateurs survolteurs (RL) de manière à coupler le second nœud survolteur (DB, HB) à l'ensemble de circuits PFC (24).

2. Système (100) selon la revendication 1, dans lequel ledit ensemble de circuits de couplage (200 ; 200A) comprend un commutateur de couplage supplémentaire (200), et dans lequel, en réponse à la tension reçue au niveau du port CC (104) ayant un second niveau de tension inférieur audit premier niveau de tension, l'ensemble de circuits de commande (18) est configuré pour :
désactiver le commutateur de couplage supplémentaire (200),
désactiver le commutateur de couplage (202),
activer le premier contacteur (K5) et le deuxième contacteur (K6) afin d'appliquer une tension survoltée comme résultat (VR) aux extrémités de la borne positive (B+) et de la borne négative (B-) de la batterie (B).

3. Système (100) selon la revendication 1, dans lequel ledit ensemble de circuits de couplage (200 ; 200A) comprend un commutateur de couplage supplémentaire (200) et dans lequel, en réponse à la tension reçue au niveau du port CC (104) ayant un second niveau de tension inférieur audit premier niveau de tension, l'ensemble de circuits de commande (18) est configuré pour :
activer le commutateur de couplage supplémentaire (200),
désactiver le commutateur de couplage (202),
activer le premier contacteur (K5) et le deuxième contacteur (K6),
de manière à fournir une tension régulée CC-cc (VD) entre les nœuds CC de sortie (HV+, HV-) de la seconde unité de charge (20A) couplés aux nœuds CC de sortie respectifs (O+, O-) de la première unité de charge (12) en tant que tension CC survoltée (VR, VD) fournie par l'ensemble de circuits PFC (24) et par le circuit convertisseur CC-CC (26).

4. Système (100) selon l'une des revendications précédentes, dans lequel la batterie (B) est configurée pour être chargée au premier niveau de tension supérieur au second niveau de tension, dans lequel ledit premier niveau de tension est de préférence le double du second niveau de tension.

5. Système (100) selon l'une des revendications précédentes, dans lequel le circuit convertisseur CC-CC (26) comprend un circuit convertisseur CC-CC unidirectionnel ou bidirectionnel (26A).

6. Système (100) selon l'une des revendications précédentes, dans lequel l'ensemble de commutateurs survolteurs (RL) est intégré dans le filtre EMI (22),
dans lequel l'ensemble de commutateurs survolteurs (RL) intégré dans le filtre EMI (22) comprend :
un premier ensemble de commutateurs survolteurs (RL1, RL2, RL3, RL4) interposé entre les nœuds d'entrée CA (L1, L2, L3, N) de la seconde unité de charge (20A) et les nœuds d'entrée PFC (P1, P2, P3, PN) de l'ensemble de circuits PFC (24), et
un deuxième ensemble de commutateurs survolteurs (RL5, RL6, RL7) interposé entre au moins un nœud d'entrée PFC (P1, P2, P3, PN) de l'ensemble de circuits PFC (24) et le second nœud survolteur (HB),
dans lequel l'ensemble de circuits de commande (18) est configuré pour piloter le premier ensemble de commutateurs survolteurs (RL1, RL2, RL3, RL4) et le deuxième ensemble de commutateurs survolteurs (RL6, RL6, RL7) :
i) en réponse à la tension d'alimentation CC reçue au niveau du port d'entrée CC (104) ayant ledit second niveau de tension inférieur audit premier niveau de tension :
en désactivant le premier ensemble de commutateurs (RL1, RL2, RL3, RL4), de manière à découpler les nœuds d'entrée CA (L1, L2, L3, N) de la seconde unité de charge (20A) des nœuds d'entrée (P1, P2, P3, PN) de l'ensemble de circuits PFC (24), et
en activant le deuxième ensemble de commutateurs survolteurs (RL5, RL6, RL7), de manière à coupler le second nœud survolteur à au moins un nœud d'entrée PFC (P1, P2, P3, PN) de l'ensemble de circuits PFC (24) ;
ii) en réponse à la réception de la tension d'alimentation CA au niveau du port CA (102) :
en activant le premier ensemble de commutateurs (RL1, RL2, RL3, RL4), de manière à coupler les nœuds d'entrée CA (L1, L2, L3, N) de la seconde unité de charge (20A) aux nœuds d'entrée PFC (P1, P2, P3, PN) de l'ensemble de circuits PFC (24), et
en désactivant le deuxième ensemble de commutateurs survolteurs (RL5, RL6, RL7), de manière à découpler le second nœud survolteur (HB) de la seconde unité de charge (20A) de l'au moins un nœud d'entrée PFC (P1, P2, P3, PN) de l'ensemble de circuits PFC (24).

7. Système (100) selon l'une des revendications précédentes, comprenant un filtre d'interférences électromagnétiques, EMI, supplémentaire (28), interposé entre le premier nœud de sortie (HV+), le second nœud de sortie (HV-) et le second nœud survolteur (HB) de la seconde unité de charge (20A) et le convertisseur CC-CC (26), le filtre EMI supplémentaire (28) étant configuré pour effectuer un filtrage EMI d'une tension d'alimentation reçue, fournissant une tension filtrée comme résultat.

8. Système (100) selon l'une des revendications précédentes, dans lequel l'ensemble de circuits PFC (24) comprend un ensemble de dispositifs en demi-pont (H1, H2, H3, H4, HN) comprenant des nœuds de commutation couplés à des nœuds d'entrée (P1, P2, P3, PN) de l'ensemble de circuits PFC (24), les dispositifs en demi-pont dans l'ensemble de dispositifs en demi-pont (H1, H2, H3, H4, HN) étant configurés pour fournir la tension redressée (VR) aux extrémités du premier nœud de sortie PFC (D1) et du second nœud de sortie PFC (D2) ;
les dispositifs en demi-pont comprenant au moins un transistor de commutation (Q3, Q4, Q5, Q6) configuré pour coupler un nœud d'entrée (PN) de l'ensemble de circuits PFC (24) aux nœuds de commutation des dispositifs en demi-pont dans l'ensemble de dispositifs en demi-pont (H1, H2, H3, H4, HN).

9. Système (100) selon la revendication 1, comprenant un troisième contacteur (K7) couplé entre un premier nœud d'entrée (P1) de l'ensemble de circuits PFC (24D) et le premier nœud de sortie (HV+) de la seconde unité de charge (20A ; 20B), dans lequel ledit ensemble de circuits de couplage (200; 200A) comprend une diode de couplage (200A) couplée audit troisième contacteur, et dans lequel, en réponse à la tension reçue au niveau du port CC (104) ayant un second niveau de tension inférieur audit premier niveau de tension, l'ensemble de circuits de commande (18) est configuré pour :
activer le troisième contacteur (K7),
désactiver le commutateur de couplage (202),
activer le premier contacteur (K5) et le deuxième contacteur (K6),
de manière à fournir une tension CC régulée (VD) entre les nœuds de sortie CC (HV+, HV-) de la seconde unité de charge (20B) couplés aux nœuds de sortie CC respectifs (O+, O-) de la première unité de charge (12) en tant que tension CC survoltée (VR, VD) fournie par l'ensemble de circuits PFC (24D) et par le circuit convertisseur CC-CC (26A).

10. Véhicule électrique alimenté par batterie (BEV) équipé d'un système (100) selon l'une des revendications précédentes.
